# EUROPÄISCHE PATENTSCHRIFT

(11) **EP 0 986 343 B1**
(45) Veröffentlichungstag und Bekanntmachung des Hinweises auf die Patenterteilung: **04.08.2004**
(21) Anmeldenummer: 98929348.5
(22) Anmeldetag: 20.05.1998
(51) Int. Cl.: A61C 8/00, A61C 13/265, A61C 9/00

(54) **VORRICHTUNG ZUR BILDUNG EINES ZAHNERSATZES**
DEVICE FOR FORMING A DENTAL PROSTHESIS
DISPOSITIF POUR REALISER UNE PROTHESE DENTAIRE

(30) Priorität: 24.05.1997 CH 122097; 24.05.1997 CH 122297
(43) Veröffentlichungstag der Anmeldung: 22.03.2000
(73) Patentinhaber: Straumann Holding AG, 4437 Waldenburg (CH)
(72) Erfinder: Sutter, Franz, 4435 Niederdorf (CH)
(86) Internationale Anmeldenummer: PCT/EP1998/002966
(87) Internationale Veröffentlichungsnummer: WO 1998/052490

(56) Entgegenhaltungen:
- WO-A-96/29019
- WO-A-97/28756

## Beschreibung

Die Erfindung bezieht sich auf eine Vorrichtung zur Bildung eines Zahnersatzes gemäß den in den Oberbegriffen der Patentansprüche 1 bzw. 2 angegebenen Merkmalen.

Eine derartige Vorrichtung ist aus der WO-A-96/29019 bekannt. Diese Vorrichtung enthält ein als Abdruckkappe ausgebildetes Element und Haltemittel zur Verbindung mit einem als Manipulierimplantat ausgebildeten Support. Die Haltemittel sind als ein Steckanker ausgebildet, welcher in einer Zylinderbohrung der Abdruckkappe mit Preßsitz befestigt ist. Im übrigen greifen die Haltemittel vollständig in eine zur Abdruckkappe offene Zylinderbohrung des Supports ein. Der Steckanker enthält ferner ein Trägerelement, welches teilweise im oberen Randbereich der Zylinderbohrung des Supports eingreift und an deren Innenfläche anliegt. Hierdurch wird eine exakte axiale Führung der Abdruckkappe bzw. des Elements bezüglich des Supports erreicht. Eine Trennbewegung der Abdruckkappe bezüglich des Supports bzw. umgekehrt ist praktisch nur in Richtung der Längsachse des Supports durchführbar. Bei einer schräggerichteten Trennbewegung besteht die Gefahr, daß die vorgesehene Position der Abdruckkappe sich ändert. Es ergeben sich nicht unerhebliche Probleme, wenn für Brücken, Teilprothesen oder Vollprothesen zwei oder evtl. noch mehr Supporte erforderlich sind, welche nur im Idealfall zueinander parallele Achsen aufweisen, so daß bei einer Trennung der Abdruckkappen von dem jeweils zugeordneten Support Bewegungen schräg zu wenigstens einer der genannten Achsen praktisch unvermeidbar sind.

Die Vorrichtung-dient zur Bildung eines Zahnersatzes, welcher als ein künstlicher Einzelzahn, einer Brücke oder eine mehrere Zähne bildende Prothese ausgebildet sein kann. Der Support kann beispielsweise aus einem einstückigen Körper oder aus einem Implantat und einem ursprünglich separaten, am Implantat befestigten Sekundärteil bestehen. Das am Support befestigbare Element kann als Abformkappe oder Abdruckkappe ausgebildet sein, um mit Hilfe eines Abformlöffels und von diesem gehaltenem, mindestens während einer gewissen Zeitdauer plastisch verformbarem Abformmaterial eine Abformung bzw. einen Abdruck des mindestens einen Support im Mund eines Patienten umgebenden Weichgewebes und/oder evtl. Knochens sowie von allenfalls in der Nähe des Supports vorhandenen, natürlichen Zähnen zu machen und dann ein Meistermodell herzustellen, dessen Oberfläche der Abformung bzw. dem Abdruck entspricht.

Das am Support befestigbare Element kann jedoch auch ein Einheilelement bzw. eine Einheilkappe oder ein Aufbauelement und/oder eine Suprakonstruktion sein, das bzw. die beispielsweise eine Krone und/oder eine Brücke oder eine Prothese mit mehreren künstlichen Zähnen bildet.

### Stand der Technik

Eine aus dem Buch "Orale Implantologie" André Schroeder, Franz Sutter, Daniel Buser und Gisbert Krekeler, 2. Auflage, 1994, Georg Thieme Verlag, Stuttgart/New York, Seiten 209-214 bekannte Vorrichtung besitzt einen Support mit einem Implantat sowie einem Sekundärteil und eine Abformkappe. Die Abformkappe wird für die Abformung vorübergehend mit einer Schraube am Sekundärteil des Supports befestigt. Diese bekannte Vorrichtung hat den Nachteil, dass es oft schwierig, zeitraubend und für den Patienten unangenehm ist, die Abformkappe im Mund des Patienten zuerst am Support festzuschrauben und nach der Abformung wieder loszuschrauben. Zudem muss der Abformlöffel vor der Abformung für den bzw. jeden Support mit einem der individuellen Situation eines Patienten entsprechenden Loch versehen werden, so dass die in den Support eingeschraubte Schraube nach der Abformung durch das Loch des Abformlöffels hindurch aus dem Support losgeschraubt und herausgenommen werden kann.

Eine aus der DE 44 15 670 A bekannte Abformkappe besitzt bei dem die Öffnung ihres Innenraums umschliessenden Rand federnde Rastlaschen. Da die Rastlaschen aussen an dem zum Verbinden mit dem Support bestimmten Ende angeordnet sind, ist die bekannte Abformkappe nicht zum Abformen der Schulter des Supports und der Umgebung der Schulter geeignet.

Das bekannte, lösbare Befestigen von Einheilelementen mit Schrauben und das bekannte Befestigen von zur Bildung von Kronen, Brücken oder Prothesen mit mehreren Zähnen dienenden Aufbauelementen und/oder Suprakonstruktionen durch Schraubverbindungen ist ebenfalls oft schwierig und zeitraubend.

### Abriss der Erfindung

Der Erfindung liegt die Aufgabe zugrunde, Nachteile der bekannten Vorrichtungen zu beheben und insbesondere eine Vorrichtung zu schaffen, deren Abformelement oder sonstiges Element schnell sowie einfach an einem aus einem Knochen oder einem Meistermodell herausragenden Support befestigt und wieder vom Support getrennt werden kann, wobei das Element in befestigtem Zustand fest und möglichst spaltfrei auf der Schulter des Supports aufliegen soll. Des weiteren soll ermöglicht werden, dass der auf der Schulter des Supports aufliegende Abschnitt des mit dem Support verbindbaren Elements mit einem vollständig kreisförmigen Aussenrand versehen werden kann. Ferner soll vermieden werden, dass die Haltemittel die Schulter abdecken, so dass die Flächen, mit denen der Support und das Element aufeinander aufliegen, vorzugsweise entlang dem ganzen Umfang der Schulter von aussen her in ungefähr radialen Blickrichtungen sichtbar sein können. Fall das Element als Abformelement ausgebildet ist, soll insbesondere auch eine Abformung der Schulter und der Umgebung von dieser entlang dem ganzen Umfang der Schulter ermöglicht werden.

Diese Aufgabe wird gemäss der Erfindung gelöst durch eine Vorrichtung zur Bildung eines Zahnersatzes, mit einem Support und einem durch Haltemittel lösbar mit diesem verbindbaren Element, wobei der Support eine zum Verankern in einem Knochen und/oder Meistermodell bestimmte Verankerungspartie, einen zum Herausragen aus dem Knochen bzw. Meistermodell bestimmten Kopf und eine zwischen diesem und der Verankerungspartie vorhandene Schulter aufweist, wobei das Element bei zusammengesetzter Vorrichtung mit einer Auflagefläche auf der Schulter aufliegt und den Kopf im Querschnitt umschliesst und wobei die Vorrichtung dadurch gekennzeichnet ist, dass die Haltemittel und/oder der Support mindestens stellenweise elastisch deformierbar sind und dass die Haltemittel bei zusammengesetzter Vorrichtung aussen am Support auf der der Verankerungspartie abgewandten Seite der Schulter oder in einem axialen Loch des Supports mit diesem verklemmt und/oder verrastet sind.

Vorteilhafte Weiterbildungen des Erfindungsgegenstandes gehen aus den abhängigen Ansprüchen hervor.

Das am Support befestigbare Element besteht beispielsweise aus einem Abformelement. Der Support und das Abformelement können beispielsweise im allgemeinen gerade sein, so dass die Verankerungspartie und der Kopf des Supports sowie das Abformelement koaxial sowie im allgemeinen rotationssymmetrisch zu einer Symmetrieachse des Supports sind. Der Kopf des Supports und/oder das Abformelement kann jedoch gegenüber der Verankerungspartie des Supports und der dessen Schulter bildenden Partie abgewinkelt sein und eine Achse definieren, die mit den von der Verankerungspartie und Schulter des Supports definierten Achse einen Winkel bildet, der vorzugsweise höchstens 30° und beispielsweise etwa 10° bis 20° beträgt.

Bei einer vorteilhaften Ausgestaltung des Erfindungsgegenstands sind die Haltemittel mindestens in einem Bereich unter einer elastischen Deformation biegbar und/oder dehnbar und/oder zusammendrückbar sowie federnd. Der Support besteht vorzugsweise aus einem metallischen Material und ist vorzugsweise mindestens im wesentlichen mindestens zum grössten Teil im wesentlichen starr und formfest, kann aber eventuell einen Halteabschnitt aufweisen, an dem die Haltemittel angreifen und derart geformt und bemessen ist, dass der Halteabschnitt elastisch deformierbar - d.h. formeleastisch - und mehr oder weniger federnd ist.

Die erfindungsgemässe Vorrichtung ermöglicht, das Abformelement oder sonstige Element sowohl bei einem geraden als auch bei einem Support mit abgewinkeltem Kopf durch Aufstecken auf den Support durch Anklemmen und/oder Anklipsen und/oder Einrasten schnell lösbar mit diesem zu verbinden und danach durch Wegziehen wieder vom Support zu trennen, ohne dass eine Schraube festgeschraubt und wieder losgeschraubt werden muss.

Wenn das Element am Support gehalten ist, erzeugen die Haltemittel bei einer zweckmässigen Ausgestaltung eine das Abformelement gegen die Schulter des Supports drückende Kraft. Dadurch kann sichergestellt werden, dass das Element mindestens annähernd spaltfrei auf der Schulter des Supports aufliegt.

Der Support besitzt bei der Schulter vorzugsweise eine ringförmige Schulterfläche. Das Abformelement oder sonstige Element hat vorzugsweise eine ringförmige Auflagefläche. Die Schulterfläche des Supports und die Auflagefläche des Elements sind beispielsweise beide konisch oder beide eben und liegen bei zusammengebauter Vorrichtung vorzugsweise bis zu ihren Aussenrändern aufeinander auf. Der Support und das Element sind ferner vorzugsweise derart ausgebildet, dass die Aussenränder der Schulterfläche und der Auflagefläche vollständig kreisförmig und bei zusammengebauter Vorrichtung entlang ihrem ganzen Umfang von der Umgebung der Vorrichtung her in Blickrichtungen sichtbar sind, die ungefähr radial und rechtwinklig zur Achse der Verankerungspartie und der Schulter des Supports sind.

Das Abformelement besitzt vorzugsweise eine formfeste Wand, die einen Innenraum begrenzt. Die vorzugsweise elastisch deformierbaren Haltemittel befinden sich dann vorzugsweise vollständig im Innenraum des Abformelements, so dass die Haltemittel das das Abformelement bei der Abformung umgebende Abformmaterial nicht berühren können. Dadurch wird vermieden, dass die sich beim Verbinden des Elements mit dem Support sowie beim Trennen des Elements vom Support etwas bewegenden Haltemittel Druckkräfte auf das mindestens während einer gewissen Zeitdauer plastisch verformbare Abformmaterial ausüben, welche die Genauigkeit der Abformung beeinträchtigen könnten.

Brücken, Teilprothesen und Vollprothesen werden häufig mit zwei oder eventuell noch mehr Supporten befestigt. Die Supporte und insbesondere deren Köpfe haben dann im Idealfall zueinander parallele Achsen. In der Praxis sind die Achsen jedoch häufig schief zueinander und beispielsweise zu den. freien Enden der Köpfe hin divergierend oder konvergierend. Die erfindungsgemässen Vorrichtungen sind bei einer vorteilhaften Ausgestaltung derart ausgebildet, dass ein Abformelement auch in einer zur Achse eines Kopfs geneigten Verschieberichtung auf den Kopf aufgesteckt und von diesem weggezogen werden kann. Man kann dann zwei oder mehr an Supporten gehaltene und in Abformmaterial eingebettete Abformelemente auch dann gleichzeitig von den Supporten wegziehen, wenn die Achsen der Support-Köpfe schief zueinander sind und miteinander Winkel bilden, die beispielsweise bis 30° oder sogar bis 40° betragen. Das Abformelement und dessen Haltemittel können beim Wegziehen vom Support und beim Verbinden mit diesem beispielsweise in einer Richtung über die Köpfe verschoben werden, die mit der Achse jedes Support-Kopfs einen Winkel bis 15° oder sogar bis 20° bildet.

Bei einer vorteilhaften Ausgestaltung der Vorrichtung besitzt die Schulter eine sich zum freien Ende des Kopfs hin verjüngende, konische Schulterfläche und der Kopf einen im wesentlichen zur Achse parallelen, im allgemeinen zylindrischen Kopfabschnitt sowie einen sich von diesem weg zum freien Ende des Kopfs hin verjüngenden, im allgemeinen konischen Kopfabschnitt, der eine Konusfläche definiert, die mit der Achse einen kleineren Winkel bildet als die konische Schulterfläche. Ferner besitzt das Abformelement vorzugsweise eine bei zusammengebauter Vorrichtung spaltfrei auf der konischen Schulterfläche aufliegende Auflagefläche und eine konische Innenfläche, die mit kleinem Spiel vom konischen Kopfabschnitt gestützt ist. Das erwähnte Spiel zwischen dem konischen Kopfabschnitt und der Kappe kann mindestens in gewissen Richtungen höchstens 0,02 mm oder nur höchstens 0,01 mm sein, vorzugsweise im Bereich von Mikrometern liegen und beispielsweise höchstens 5 µm oder höchstens 3 µm betragen.

Die axiale Abmessung der Höhe des Kopfs ist vorteilhafterweise so klein bemessen, dass der Support wahlweise subgingival oder transgingival oder in halb in der Gingiva versenkter Lagen ("semi-submerged") in den Mund eines Patienten eingesetzt werden kann.

Bei einer vorteilhaften Ausgestaltung der Vorrichtung besitzt der Kopf des Supports mindestens eine an mindestens einer Aussenfläche des Kopfs, zum Beispiel an der Umfangsfläche und/oder an der Stirnfläche, angeordnete Positionierungsausnehmung. Wenn die Haltemittel an einem sich aussen am Support befindenden Halteabschnitt des letzteren angreifen, befindet sich die bzw. jede Positionierungsausnehmung vorzugsweise auf der der Verankerungspartie abgewandten Seite einer Haltefläche an der die Haltemittel angreifen, und ist beispielsweise durch eine ungefähr axiale oder ungefähr radiale oder geneigte Nut oder Kerbe gebildet. Der Kopf und die Verankerungspartie des Supports sind beispielsweise koaxial sowie im allgemeinen rotationssymmetrisch zu einer Symmetrieachse des Supports. Der Kopf kann dann beispielsweise einen Positionierungsabschnitt mit mehreren um die Achse des Supports herum abwechselnd aufeinanderfolgenden Positionierungsvorsprüngen und Positionierungsausnehmungen bzw. Positionierungszwischenräumen aufweisen. Die Ausnehmungen umfassen dann zum Beispiel mehrere erste Ausnehmungen mit gleichen Formen sowie gleichen Abmessungen und eine zweite Ausnehmung, die in mindestens einer Richtung eine grössere Abmessung hat als die ersten Ausnehmungen. Die zweite Ausnehmung ist zum Beispiel breiter und/oder tiefer als die ersten Ausnehmungen. Die einander benachbarten, ersten Ausnehmungen haben dann entlang einem zur Achse des Supports koaxialen Teilkreis gemessene, gleiche Entfernungen voneinander und definieren zusammen eine Kreis-Teilung oder - kurz gesagt - Teilung. Zur Klarstellung sei noch angemerkt, dass die Teilung gleich dem n-ten Teil eines vollen Kreises ist, wobei n eine ganze Zahl ist und zweckmässigerweise mindestens 6 sowie höchstens 72 beträgt, so dass der Teilungswinkel im Bereich von 60° bis 5° liegt. Die zweite Ausnehmung kann beispielsweise dadurch gebildet werden, dass man - mindestens in Gedanken - von gleichmässig auf einen vollen Kreis verteilten, identischen Vorsprüngen und ersten Ausnehmungen ausgeht und dann einen oder eventuell mehrere dieser Vorsprünge entfernt bzw. weglässt. Eine zweite, breitere Ausnehmung kann jedoch statt dessen dadurch gebildet werden, dass man einen Vorsprung oder zwei einander benachbarte Vorsprünge schmäler ausbildet als die restlichen Vorsprünge.

Das Abformelement kann mindestens einen Positionierungsvorsprung aufweisen, der in die bzw. eine Positionierungsausnehmung des Supports eingreifen und dadurch eine Drehstellung des Elements bezüglich einer Achse des Supports definiert und das Element gegen Drehungen um die Achse des Supports sichert. Wenn der Support mehrere gleich ausgebildete erste Ausnehmungen und eine tiefere und/oder breitere, zweite Ausnehmung aufweist, kann das Element beispielsweise einen Positionierungsabschnitt mit gleichmässig entlang seinem Umfang verteilten Positionierungsvorsprüngen aufweisen, die durch Ausnehmungen bzw. Zwischenräume voneinander getrennt sowie alle gleich ausgebildet sind und in alle Positionierungsausnehmungen des Supports eingreifen können. Ein solches Element kann bezüglich der Achse des Supports in verschiedenen, wählbaren Positionen - d.h. Drehstellungen - am Support befestigt werden, wobei jede Wählbare Position - d.h. Drehstellung - durch die ineinander eingreifenden Vorsprünge und Ausnehmungen des Elements und des Supports definiert ist und wobei der Drehwinkel zwischen den einander benachbarten Drehstellungen gleich dem durch die genannte Teilung festgelegten Teilungswinkel ist. Diese Verbindungsweise eines Elements mit dem Support wird im folgenden als Multipositionierung des Elements bezeichnet.

Wenn der Support nur eine einzige Positionierungsausnehmung hat, kann das Abformelement einen in diese Ausnehmung hineinpassenden Positionierungsvorsprung aufweisen. Falls der Support mehrere erste Positionierungsausnehmungen und eine zweite Positionierungsausnehmung aufweist, kann das Element beispielsweise einen Positionierungsabschnitt mit mehreren identischen, in die ersten Ausnehmungen des Supports hineinpassenden Positionierungsvorsprüngen sowie einem breiteren und/oder höheren Positionierungsvorsprung aufweisen, der in die zweite Ausnehmung des Supports hineinpasst, aber nicht in die ersten Ausnehmungen des Supports eingreifen kann. Das Element kann bei diesen Varianten bezüglich der Achse des Supports nur in einer einzigen Drehstellung mit dem Support verbunden werden. Diese Verbindungsweisen eines Elements mit dem Support werden im folgenden als Einzelpositionierung des Elements bezeichnet.

Das Abformelement kann jedoch auch ohne Positionierungsabschnitt und insbesondere ohne Positionierungsvorsprünge hergestellt werden und so ausgebildet sein, dass es nach der Befestigung am Support in keine Positionierungsausnehmung des Supports eingreift. Das Element kann dann in beliebigen Drehstellungen am Support befestigt werden. Dies wird im folgenden als Freipositionierung des Elements bezeichnet.

Bei einer vorteilhaften Ausbildung des Supports kann man also an diesem wahlweise ein Abformelement oder sonstiges Elements mit Multipositionierung oder ein Element mit Einzelpositionierung oder ein Element mit Freipositionierung anklemmen und/oder anklipsen. Welche Art von Element am günstigsten ist, hängt von der Art des zu bildenden Zahnersatzes und der individuellen, medizinischen Indikation ab.

Wie schon erwähnt, kann das am Support befestigbare Element auch aus einem Einheilelement bzw. einer Einheilkappe oder einem Aufbauelement und/oder einer Suprakonstruktion bestehen, die zur Bildung einer Krone oder einer Brücke oder einer Prothese mit mehreren künstlichen Zähnen dient. Viele vorgängig und nachfolgend in bezug auf Abformelemente beschriebene Eigenschaften und Vorteile können analog bei Einheilelementen, Aufbauelementen und Suprakonstruktionen vorhanden sein.

### Kurze Beschreibung der Zeichnungen

Der Erfindungsgegenstand und weitere Vorteile von diesem werden anschliessend anhand in den Zeichnungen dargestellter Ausführungsbeispiele erläutert. In der Zeichnung zeigen
Fig. 1 eine teils in Schrägansicht, teils im Schnitt dargestellte Vorrichtung mit einem einstückigen Support, und einem an diesem befestigten Abformelement,
Fig. 2 einen Querschnitt durch den Kopf des Supports und das für die Freipositionierung ausgebildete Abformelement,
Fig. 3 einen Axialschnitt durch Abschnitte des Supports und des Abformelements während des Aufsteckens des letzteren auf den Support,
Fig. 4 einen Axialschnitt durch die in Fig. 3 ersichtlichen Teile bei zusammengebauter Vorrichtung,
Fig. 5 eine teils im Axialschnitt und teils in Ansicht gezeichnete Vorrichtung mit einem Abformelement für die Multipositionierung,
Fig. 6 einen Querschnitt entlang der Linie VI - VI der Fig. 5 durch die in dieser gezeichnete Vorrichtung,
Fig. 7 einen Querschnitt durch eine Vorrichtung mit einem Abformelement für die Einzelpositionierung,
Fig. 8 eine Schrägansicht eines anderen, aufgeschnittenen Abformelements,
die Figuren 9 bis 14 Arbeitsschritte bei der Verwendung eines Abformelements zur Bildung eines Aufbauelements,
Fig. 15 zwei teils im Schnitt, teils in Ansicht gezeichnete Vorrichtungen mit in einen Knochen eingesetzten Supporten und einen Abformlöffel,
Fig. 16 Teile von einer der in Fig. 15 ersichtlichen Vorrichtungen beim Entfernen des Abformelements vom Support,
Fig. 17 eine Schrägansicht eines andern, aufgebrochenen Supports,
Fig. 18 eine Schrägansicht eines aufgebrochenen, zum Support gemäss Fig. 17 passenden Abformelements,
Fig. 19 einen Axialschnitt durch eine Vorrichtung mit einem Support gemäss Fig. 17 und einem Abformelement gemäss Fig. 18,
Fig. 20 eine Schrägansicht eines andern, zum Support gemäss Fig. 17 passenden Abformelements,
Fig. 21 einen Abformlöffel, ein gemäss Fig. 18 ausgebildetes Abformelement und einen Manipuliersupport,
Fig. 22 einen Axialschnitt durch eine Vorrichtung mit einem Support gemäss den Figuren 1 bis 4, aber einem anderen Abformelement,
Fig. 23 eine teils im Axialschnitt, teils in Ansicht gezeichnete Vorrichtung, deren Support aus einem Implantat und einem geraden Sekundärteil besteht,
Fig. 24 einen Axialschnitt durch eine Vorrichtung, deren Support ein Implantat und einen abgewinkelten Sekundärteil aufweist,
Fig. 25 einen Querschnitt durch Teile der in Fig. 24 ersichtlichen Vorrichtung in grösserem Massstab,
Fig. 26 einen Axialschnitt durch eine andere Vorrichtung mit einem abgewinkelten Sekundärteil,
Fig. 27 einen Axialschnitt durch noch eine andere Vorrichtung mit einem abgewinkelten Sekundärteil,
Fig. 28 eine Schrägansicht eines Supports, dessen Kopf an der Stirnseite mit Positionierungsvorsprüngen und -ausnehmungen versehen ist,
Fig. 29 eine Schrägansicht eines zum Support gemäss Fig. 28 passenden Abformelements,
Fig. 30 einen Axialschnitt durch eine Variante der Vorrichtung,
Fig. 31 eine Schrägansicht des Kopfs des in Fig. 30 ersichtlichen Supports,
Fig. 32 eine Abwicklung von Teilen der Vorrichtung gemäss Fig. 30,
Fig. 33 einen Axialschnitt durch eine Variante einer Vorrichtung,
Fig. 34 eine Schrägansicht einer aufgebrochenen Vorrichtung mit einem Implantat, einem Abformelement und einem Befestigungselement,
Fig. 35 einen Axialschnitt der Vorrichtung gemäss Fig. 34,
Fig. 36 einen Querschnitt durch einen Bereich der letztgenanntenVorrichtung entlang der Linie XXXVI - XXXI von Fig. 34,
Fig. 37 einen Ausschnitt aus Fig. 35 in grösserem Massstab,
Fig. 38 eine teils im Axialschnitt, teils in Ansicht gezeichnete Vorrichtung mit einer Einheilkappe,
Fig. 39 einen Axialschnitt durch eine Vorrichtung mit einem Abformelement,
die Figuren 40, 41 Axialschnitte durch Teile von ähnlich wie die Vorrichtung gemäss Fig. 39 ausgebildeten Vorrichtungen und
Fig. 42 einen Axialschnitt durch eine Vorrichtung mit einem am Support befestigten Aufbauelement.

### Beschreibung bevorzugter Ausführungsbeispiele

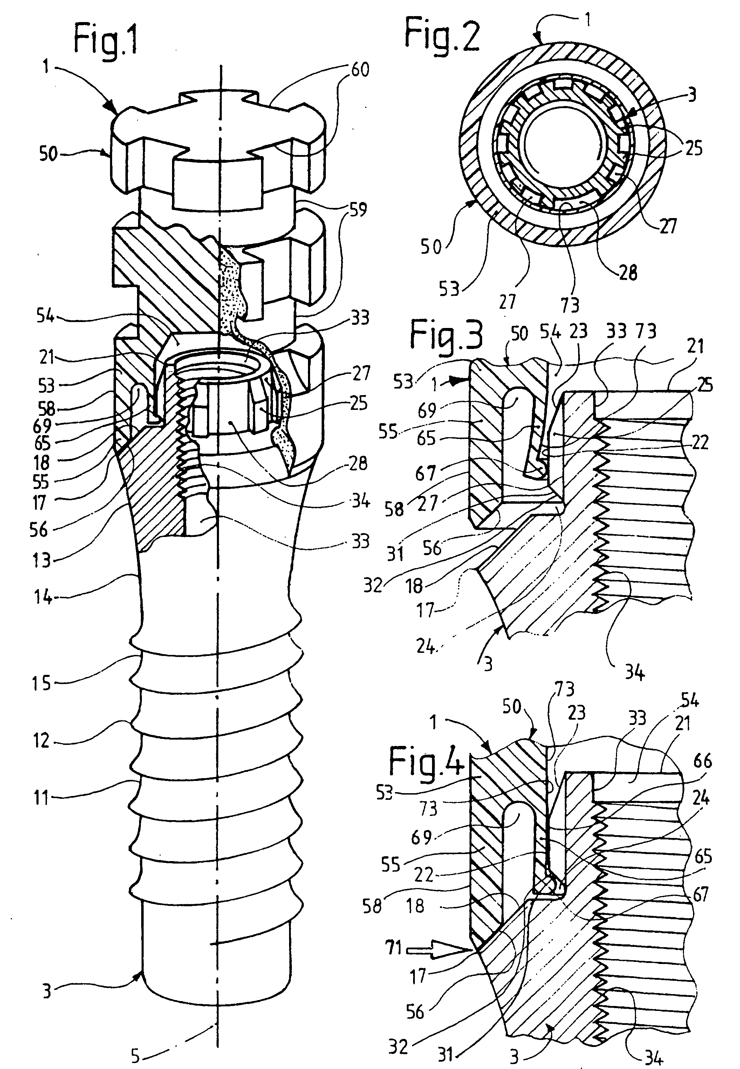

Die in den Figuren 1 bis 4 ersichtliche Vorrichtung 1 besitzt einen Support 3, der aus einem einstückigen Implantat besteht. Der Support 3 bzw. das Implantat ist länglich und im allgemeinen rotationssymmetrisch zu einer Achse 5. Der Support 3 besitzt einen im allgemeinen zylindrischen Abschnitt 11 mit einem Aussengewinde 12 und einen trompetenförmigen, sich vom zylindrischen Abschnitt 11 weg nach oben erweiternden Abschnitt 13. Die Abschnitte 11, 13 haben eine Mantel- und/oder Aussenfläche 14. Der zylindrische Abschnitt 11 und das untere Ende des trompetenförmigen Abschnitts 13 bilden zusammen die Verankerungspartie 15 des Supports 3. Dieser hat am oberen Ende des trompetenförmigen Abschnitts 13 eine Schulter 17 mit einer ringförmigen, konischen Schulterfläche 18, die von der Verankerungspartie 13 weg zur Achse 5 hin geneigt ist, mit dieser einen Winkel von 40° bis 50°, beispielsweise 45° bildet und einen vollständig kreisförmigen Aussenrand hat.

Der Support 3 besitzt eine an den oberen, inneren Rand der konischen Schulterfläche 18 anschliessende, schmale, ringförmige, ebene Fläche und einen von dieser weg nach oben ragenden Kopf 21 mit einem zur Achse parallelen, im allgemeinen zylindrischen Abschnitt 22 und einem sich von diesem weg nach oben zum freien Ende des Kopfs hin verjüngenden, konischen Abschnitt 23. Dieser bildet mit der Achse 5 einen Winkel, der kleiner ist als der von der Schulterfläche 18 mit der Achse 5 gebildete Winkel und vorzugsweise 10° bis 30°, etwa 15° bis 25°, nämlich zum Beispiel ungefähr 20° beträgt. Der Kopf hat an seinem oberen, freien Ende eine ringförmige, ebene, zur Achse rechtwinklige Stirnfläche. Der zylindrische Abschnitt 22 ist durch eine Ringnut 24 vom oberen Ende der Schulter 17 abgegrenzt. Die beiden Abschnitte 22, 23 bilden zusammen einen Positionierungsabschnitt und weisen um die Achse 5 herum abwechselnd aufeinanderfolgende Positionierungsvorsprünge 25 und Positionierungsausnehmungen 27, 28 auf. Dabei sind mehrere identisch ausgebildet, erste Positionierungsausnehmungen 27 und eine zweite, breitere Positionierungsausnehmung 28 vorhanden. Die letztere kann beispielsweise ausgehend von zwölf identischen, gleichmässig auf einen vollen Kreis verteilten, eine 12er-Teilung definierenden Ausnehmungen und dazwischen angeordneten Vorsprüngen durch Weglassen oder Entfernen eines Vorsprungs gebildet werden, so dass elf gleich ausgebildete Vorsprünge 25 und zehn erste Ausnehmungen verbleiben. Die Ausnehmungen 27, 28 sind durch Nuten gebildet sowie parallel zur Achse 5, haben insbesondere einen zur Achse 5 parallelen Grund und erstrecken sich vom unteren Ende des zylindrischen Abschnitts 22 bis zum oberen, freien Ende des Kopfs 21, d.h. bis zu dessen ebener Stirnfläche. Die Tiefen der Ausnehmungen 27, 28 sind beispielsweise ein wenig kleiner als die Tiefe der Ringnut 24, wobei diese Tiefen alle von der Umfangsfläche des zylindrischen Abschnitts 22 aus gemessen sind. Ferner sind die radialen Abstände der tiefsten Stellen der Ausnehmungen 27, 28 ungefähr gleich dem Radius des oberen, dünneren Endes des konischen Abschnitts 23, so dass die Ausnehmungen 27, 28 beim oberen Ende des konischen Abschnitts 23 ungefähr in dessen Rand auslaufen.

Die obere Flanke der Ringnut 24 bildet eine ringförmige Hinterschneidung 31 des zylindrischen Abschnitts 22. Es sei angemerkt, dass die Hinterschneidung 31 durch die Ausnehmungen 27, 28 in weitgehend voneinander getrennte, um die Achse 5 herum verteilte Hinterschneidungen der Vorsprünge 27 unterteilt ist, jedoch als eine Hinterschneidung angesehen und bezeichnet wird. Die Hinterschneidung 31 dient als Halteabschnitt und/oder Verbindungsabschnitt und ist mindestens im wesentlichen durch eine von der Verankerungspartie 15 weg aufwärts nach aussen geneigte und mindestens im wesentlichen konische Haltefläche und/oder Verbindungsfläche 32 gebildet. Die letztere oder - genauer gesagt deren konischer Hauptteil - bildet mit der Achse 5 einen Winkel, der mindestens 15°, höchstens 75° und zum Beispiel ungefähr 40° bis 50° beträgt. Die Vorsprünge 25 haben von Abschnitten der Umfangsfläche des zylindrischen Abschnitts 22 gebildete, zur Achse 5 parallele Scheitel, am unteren Ende von der Hinterschneidung 31 gebildete Anschrägungen und am oberen Ende von der Umfangsfläche des konischen Abschnitts 23 gebildete Anschrägungen. Der Grund der Ringnut 24 ist im Axialschnitt derart gebogen, dass er die am oberen Schulterende vorhandene, ebene Fläche glatt und stetig mit der konischen Fläche der Hinterschneidung 31 verbindet.

Der Support 3 hat ein zur Achse 5 koaxiales Sackloch 33, das in die Stirnfläche des Kopfs 21 mündet und einen Abschnitt mit einem Innengewinde 34 besitzt.

Die Vorrichtung 1 weist ferner ein Abformelement 50 auf. Dieses ist mindestens im unteren Teil hohl sowie kappenförmig und hat eine formfeste Wand 53, die einen gegen unten offenen Innenraum 54 begrenzt. Der sich oberhalb des Innenraums 54 befindende Bereich des Abformelements hat dann beispielsweise einen vollen Querschnitt. Der unterste, im Querschnitt ringförmige Bereich der Wand 53 bildet einen Auflageabschnitt 55 und hat an seinem freien Ende eine ringförmige, konische Auflagefläche 56. Deren Aussenrand ist vollständig kreisförmig, bildet die tiefste Stelle des Abformelements und begrenzt die Öffnung, bei welcher der Innenraum 54 in die Umgebung des Abformelements 50 mündet. Wenn das letztere mit dem Support 3 verbunden ist, bildet die Auflagefläche 55 mit der Achse 5 den gleichen Winkel wie die Schulterfläche 18 und liegt mindestens auf einem Teil von dieser auf, wobei die beiden Flächen 18, 56 insbesondere bis zu ihren Aussenrändern aufeinander aufliegen. Die Mantel- und/oder Aussenfläche 58 des Abformelements hat beim Aussenrand der Auflagefläche 56 einen Abschnitt, der an die Mantel- und/oder Aussenfläche 14 des Supports anstösst und von diesem weg nach oben gleich oder ähnlich nach aussen geneigt ist wie der benachbarte Abschnitt der Fläche 14 des Supports, so dass die beiden Mantel- und/oder Aussenflächen 14 und 58 bei der Schulter 17 fugenlos, stufenlos und mindestens annähernd glatt sowie stetig aneinander anschliessen. An den geneigten, nur kurzen Abschnitt der Mantel- und/oder Aussenfläche 58 schliesst dann der im allgemeinen zylindrische Hauptabschnitt der Fläche 58 an. Dieser Hauptabschnitt ist jedoch mit einander kreuzenden Ringnuten 59 und axialen Nuten 60 versehen, welche die Aussenform des Abformelements strukturieren.

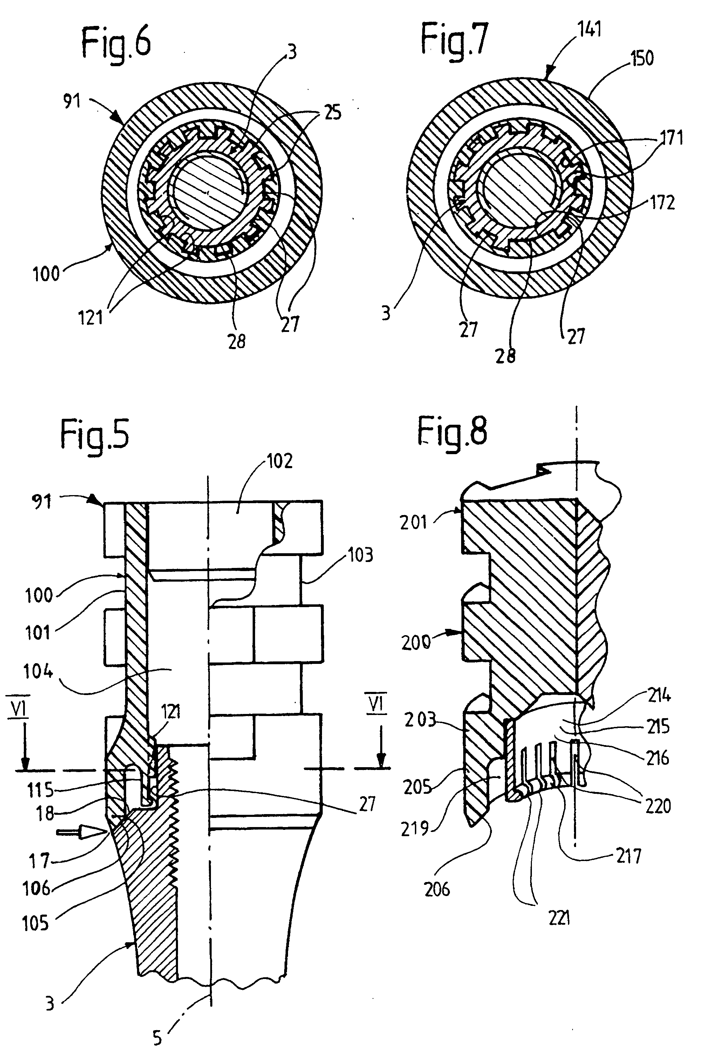

Das Abformelement 50 besitzt Verbindungsmittel und/oder Haltemittel 65, nämlich Rastmittel 65, die sich vollständig innerhalb des Innenraums 54 befinden und oberhalb der Auflagefläche 56 angeordnet sind. Die Rastmittel 65 weisen einen dünnwandigen, hülsenförmigen Abschnitt 66 auf, der an seinem oberen Ende mit der formfesten Wand 53 zusammenhängt und in undeformiertem Zustand ungefähr parallel zur Achse 5 sowie ungefähr zylindrisch ist. Die Rastmittel 65 weisen ferner eine am unteren, freien Ende des hülsenförmigen Abschnitts 66 nach innen vorstehende Nase 67 auf, deren inneres, freies Ende im Axialschnitt konvex gebogen ist. Die Rastmittel sind abgesehen von ihrem oberen, mit der Wand 53 zusammenhängenden Ende im Querschnitt durch einen vom unteren Ende des Abformelements her in dieses eingeschnittenen, ringförmigen Zwischenraum 69 vom Auflageabschnitt 55 der Wand 53 getrennt. Die Rastmittel 65 bestehen zusammen mit dem restlichen Teil des Abformelements aus einem einstückigen Körper. Dieser ist beispielsweise aus einem thermoplastischen, elastisch deformierbaren, aber doch einigermassen formbeständigen und nicht gummielastischen Kunststoff gebildet. Der hülsenförmige Abschnitt 66 der Rastmittel hat keine Einschnitte oder Schlitze und hängt über seine ganze axiale Ausdehnung entlang seinem Umfang unterbruchslos zusammen, ist jedoch so dünn bemessen, dass er elastisch deformiert, insbesondere ein wenig gespreizt werden und federn kann. Wenn das ursprünglich vom Support 3 getrennte Abformelement 50 in einer ungefähr zur Achse 5 parallelen Richtung auf den Kopf 21 des Supports aufgeschoben wird, gleitet die Nase 67 der Rastmittel 65 über den konischen Abschnitt 23 auf den zylindrischen Abschnitt 22 des Kopfs 21. Der hülsenförmige Abschnitt 66 wird dabei ausgehend von seiner zylindrischen Ruhe-Form vorübergehend deformiert und gespreizt, wie es in Fig. 3 dargestellt ist. Wenn das Abformelement die in den Figuren 1 und 4 gezeichnete Stellung erreicht, schnappen die Rastmittel hinter bzw. unter der Hinterschneidung 31 in die Ringnut 24 ein. Die Nase 67 greift dann mit einem im Axialschnitt gebogenen und geneigten Flächenabschnitt an der geneigten, konischen Haltefläche und/oder Verbindungsfläche 32 der Hinterschneidung 31 an. Die Federkraft bzw. Vorspannung der Rastmittel erzeugt dadurch eine axiale Kraft, welche die Auflagefläche 56 des Abformelements 50 gegen die Schulterfläche 18 des Supports 3 drückt. Dies gewährleistet, dass die beiden Flächen 18 und 56 mindestens annähernd spaltfrei aufeinander aufliegen. Die Aussenränder der Schulterfläche 18 und der Auflagefläche 56 bilden in den sie enthaltenden Höhenbereichen des Supports 3 und des Abformelements 50 die äussersten Begrenzungen des Supports bzw. Abformelements und sind durch keine andern Teile der Vorrichtung 1 gegen aussen abgedeckt. Die Aussenränder der Flächen 18 und 56 sind daher von der Umgebung der Vorrichtung 1 in einer ungefähr zur Achse 5 radialen sowie rechtwinkligen, in Fig. 4 durch einen Pfeil angedeuteten Blickrichtung 71 entlang dem ganzen Umfang der genannten Aussenränder sichtbar. Die Innenfläche 73 der Rastmittel 65 und des am deren oberes Ende anschliessenden Abschnitts der Wand 53 ist - abgesehen von der Nase 67 - im wesentlichen rotationssymmetrisch sowie glatt und besitzt insbesondere keinen in eine Positionierungsausnehmung 27, 28 eingreifenden Vorsprung. Das Abformelement 50 kann daher in beliebigen Drehstellungen am Support 3 befestigt werden und ist gemäss der in der Einleitung erläuterten Terminologie am Support frei positionierbar.

Die in den Figuren 5 und 6 ersichtliche Vorrichtung 91 besitzt einen Support 3 der gleich ausgebildet ist wie der in den Figuren 1 bis 4 gezeichnete Support und eine Achse 5 definiert. Die Vorrichtung 91 besitzt ferner ein im allgemeinen hohles und kappenförmiges Abformelement 100. Dieses ist aus zwei ursprünglich separaten, beispielsweise aus Kunststoff bestehenden Teilen, nämlich einer Hülse 101 mit einem durchgehenden, axialen Loch und einem dieses am oberen Ende dicht verschliessenden, an der Hülse befestigten, beispielsweise in das Loch eingepressten Verschlusselement 102 gebildet. Der Mantel der Hülse 101 bildet zusammen mit dem Verschlusselement 102 eine formfeste Wand 103. Der sich unterhalb des Verschlusselements 102 befindende Bereich des Lochs der Hülse bildet den Innenraum 104 des Abformelements 100. Der unterste Abschnitt der Wand 103 bildet einen Auflageabschnitt 105 mit einer bei zusammengebauter Vorrichtung auf der Schulterfläche 18 des Supports 3 aufliegenden Auflagefläche 106. Die Rastmittel 115 des Abformelements 100 sind im allgemeinen ähnlich wie diejenigen des Abformelements 50 ausgebildet und bestehen zusammen mit der Hülse 101 und insbesondere dem von dieser gebildete Auflageabschnitt aus einem einstückigen Körper.

Das Abformelement 100 unterscheidet sich jedoch vom Abformelement 50 dadurch, dass die im allgemeinen zylindrische Innenfläche der Hülse 101 im Bereich der Verbindung der Haltemittel und/oder Rastmittel 115 mit der formfesten Wand 103 einen ringförmigen Positionierungsabschnitt mit einem Kranz nach innen vorstehender Positionierungsvorsprünge 121 aufweist, zwischen denen Positionierungsausnehmungen vorhanden sind. Die Vorsprünge 121 sind alle gleich ausgebildet und definieren eine 12er-Teilung. Bei zusammen gebauter Vorrichtung 91 ragt in jede erste Positionierungs-ausnehmung 27 des Supports einer der Vorsprünge 121 hinein, während in die zweite Positionierungsausnehmung 28 zwei Vorsprünge 121 eingreifen. Die Positionierungsvorsprünge 25 des Supports greifen dann selbstverständlich in Positionierungsausnehmungen des Abformelements ein. Die Positionierungsvorsprünge 121 ermöglichen also eine Multipositionierung des Abformelements 110 in zwölf verschiedenen Drehstellungen, wobei das Abformelement dann in jeder wählbaren Drehstellung gegen Drehungen gesichert wird. Im übrigen greifen die Vorsprünge 121 nur in die oberen Abschnitte - beispielsweise höchstens in die oberen Hälften - der Ausnehmungen 27, 28 ein. Zudem haben die ineinander eingreifenden Positionierungsvorsprünge und -ausnehmungen des Supports und des Abformelements beispielsweise in radialer Richtung ein gewisses Spiel. Das Abformelement 100 kann dann trotz seiner Positionierungsvorsprünge in einer mit der Achse 5 des Supports 3 einen gewissen Winkel bildenden Verschieberichtung auf den Support aufgesteckt und von diesem weggezogen werden.

Die in Fig. 7 ersichtliche Vorrichtung 141 besitzt einen Support 3 der wiederum gleich ausgebildet ist wie der in den Figuren 1 bis 4 gezeichnete Support. Die Vorrichtung 141 besitzt ferner ein Abformelement 150. Dieses besitzt zehn erste, identisch ausgebildete Positionierungsvorsprünge 171 und einen zweiten, breiteren Positionierungsvorsprung 172. Bei zusammen gebauter Vorrichtung 91 ragt jeder erste Vorsprung 171 in erste Ausnehmung 27 des Supports hinein. Ferner ragt der zweite Vorsprung 172 in die zweite Ausnehmung 28 des Supports hinein. Das Abformelemente 151 kann daher nur in einer einzigen Drehstellung am Support angeklipst werden und ist also für die Einzelpositionierung ausgebildet.

Das in Fig. 8 ersichtliche Abformelement 200 weist eine einstückige, aus einem metallischen Material oder Kunststoff bestehende Kappe 201 mit einer formfesten Wand 203 auf. Diese besitzt zuunterst einen Auflageabschnitt 205 mit einer konischen Auflagefläche 206. Die Innenfläche der Kappe besitzt oberhalb der Auflagefläche zuerst einen weiteren und dann einen dünneren zylindrischen Abschnitt. Die Haltemittel und/oder Rastmittel 215 sind durch einen ursprünglich separaten, aus metallischem Material oder Kunststoff bestehenden, ring- und/oder hülsenförmigen Einsatz 214 gebildet und besitzen einen hülsenförmigen, zylindrischen Abschnitt 216, dessen oberer Teil am engeren, zylindrischen Abschnitt der Innenfläche der Kappe anliegt mit seinem oberen Ende an einem ringförmigen, radialen, ebenen Abschnitt der Innenfläche der Kappe ansteht und beispielsweise durch Einpressen und/oder Kleben fest mit dieser verbunden ist. Die Haltemittel und/oder Rastmittel 215 sind an ihrem unteren Ende mit einer nach innen vorstehenden Nase 217 versehen. Der untere Abschnitt der Rastmittel 215 ist durch einen ringförmigen Zwischenraum 219 vom Auflageabschnitt 205 getrennt und durch von unten her eingeschnittene, axiale Einschnitte 220 in federnde Zungen 221 unterteilt.

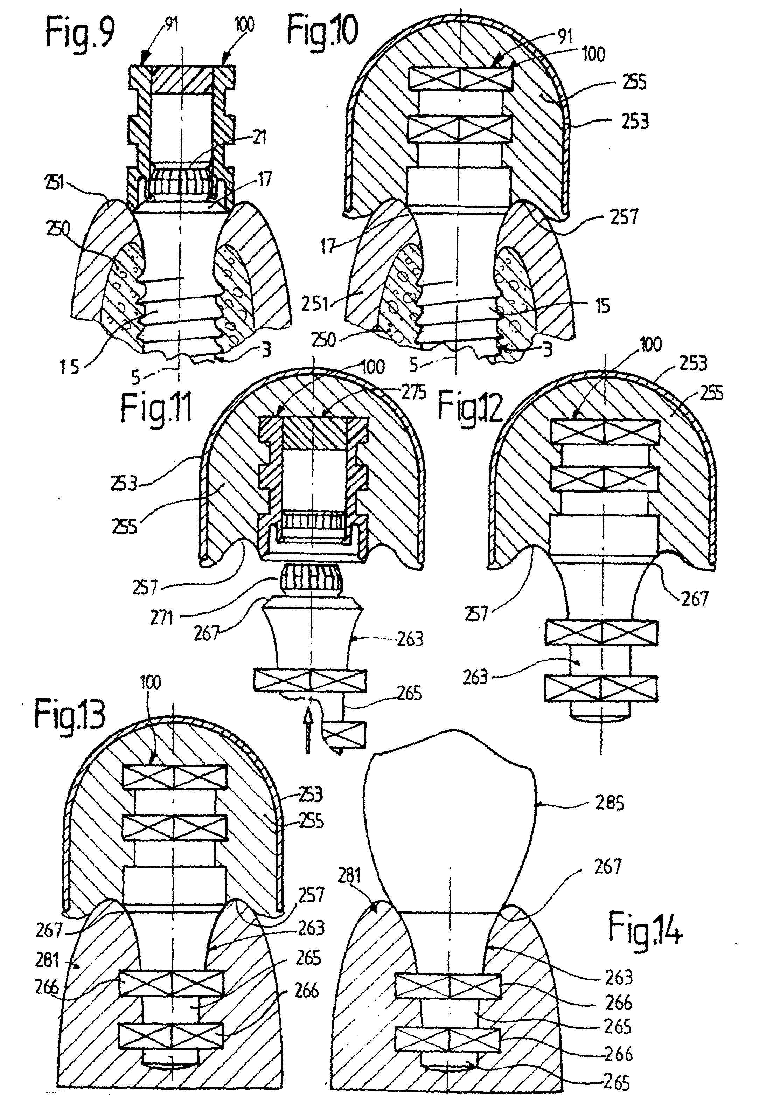

Nun wird anhand der Figuren 9 bis 14 die Verwendung von einem Support 3 und einem der vorgängig beschriebenen Abformelemente, beispielsweise dem Abformelement 100, beschrieben. Der in den Figuren 9 und 10 schematisch im Schnitt gezeichnete Knochen 250 des Unterkiefers eines Patienten ist von Weichgewebe 251, d.h. der Gingiva, bedeckt. Ein Zahnarzt erstellt im Knochen 250 ein Loch und setzt das den Support 3 bildende Implantat so in das Loch ein, dass die Verankerungspartie 15 des Supports im Knochen verankert wird, während die Schulter 17 und der Kopf 21 aus dem Knochen herausragen. Die Schulter befindet sich beispielsweise ungefähr in der Höhe des Kamms des Weichgewebes 251. Wenn der Support nach einer gewissen Zeitdauer im Knochen eingeheilt ist, steckt der Zahnarzt beispielsweise das für die Multipositionierung ausgebildete Abformelement 100 auf den Support 3. Das Abformelement 100 wird dabei in der gewählten Drehstellung lösbar am Support 3 angeklipst und bildet dann mit diesem zusammen die schon anhand der Figuren 5, 6 beschriebene Vorrichtung 91. Nun drückt der Zahnarzt gemäss Fig. 10 einen Abformlöffel 253, der mit eventuell erwärmtem, weichem, plastisch verformbarem Abformmaterial 255 gefüllt ist, über das Abformelement 100 gegen das Weichgewebe 251. Dessen den Support 3 umgebender Abschnitt, die aus diesem herausragenden Teile der Vorrichtung 91 und eventuell in der Nähe des Supports 3 noch vorhandene, natürliche Zähne erzeugen dann einen Abdruck im Abformmaterial und werden von diesem abgeformt, so dass das Abformmaterial eine Abdruckfläche 257 bildet. Nach dem Abbinden und Verfestigen des Abformmaterials 255 hebt der Zahnarzt den Abformlöffel und das in das Abformmaterial eingebettete Abformelement 100 ungefähr parallel zur Achse 5 des Supports 3 von diesem ab, wobei die Rastmittel des Abformelements ausgerastet und das letztere vom Support getrennt werden. Der Löffel 253, das in diesem gehaltene Abformmaterial 255 und das Abformelement 100 werden nun aus dem Mund des Patienten herausgenommen und beispielsweise in ein zahntechnisches Labor gebracht.

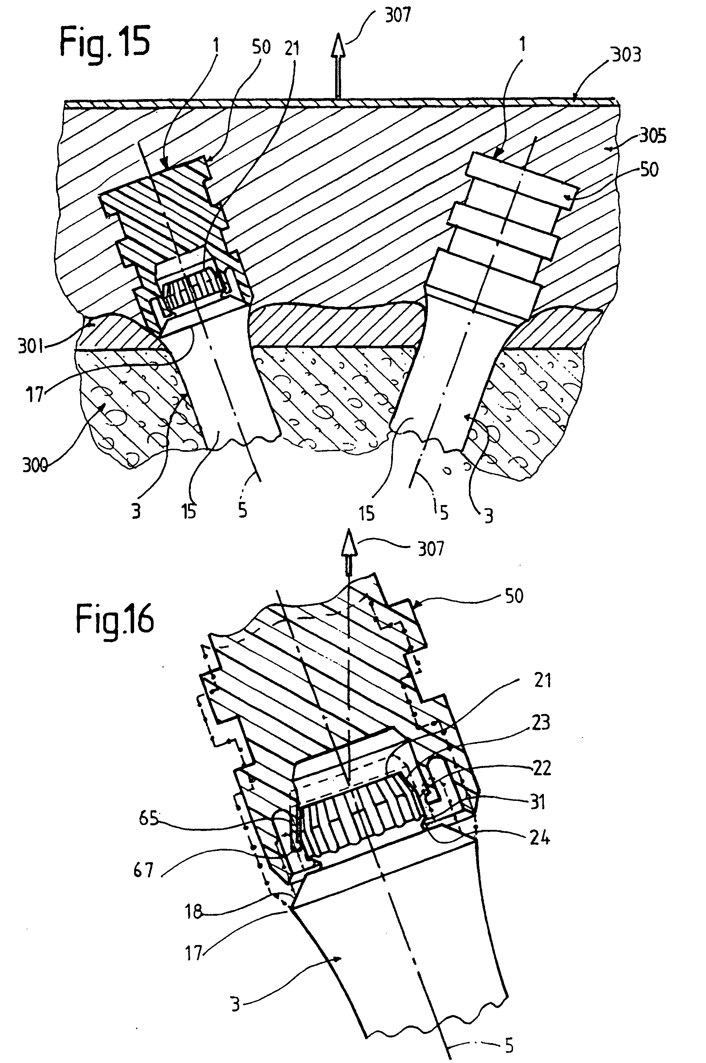

Der in Fig. 11 ersichtliche Manipuliersupport 263 besteht aus einem einstückigen Manipulierimplantat, ist im allgemeinen rotationssymmetrisch zu einer Achse und besitzt eine Verankerungspartie 265, eine Schulter 267 sowie einen Kopf 271. Die Verankerungspartie 265 ist von derjenigen des Supports 3 verschieden und besitzt noch einige nach aussen ragende Verdickungen 266, die beispielsweise sechseckförmige Ringe bzw. Scheiben bilden und zur Verbesserung der Verankerung dienen. Dagegen haben die sich oberhalb der Verankerungspartie befindenden, die Schulter sowie den Kopf des Manipuliersupports bildenden Partien des letzteren die gleichen Formen und Abmessungen wie bei dem in den Knochen 250 eingesetzten Support 3. Der Kopf 271 des Manipuliersupports 263 wird in den Innenraum des im Abformmaterial eingebetteten Abformelements 100 eingeschoben, so dass die Rastmittel des letzteren hinter der Hinterschneidung des Kopfs 271 einrasten und das Abformelement 100 gemäss Fig. 12 fest sowie lösbar mit dem Manipuliersupport 263 verbinden. Dieser bildet dann zusammen mit dem Abformelement 100 eine Vorrichtung 275. Das Abformelement liegt dann mit seiner konischen Auflagefläche auf der ringförmigen, konischen Schulterfläche des Manipuliersupports auf. Danach wird ein fliessfähiges oder mindestens gut plastisch verformbares Modellmaterial, beispielsweise Gips, um die Verankerungspartie 265 herum auf die Abdruckfläche 257 aufgebracht, beispielsweise angegossen und/oder angedrückt und ein aus dem Modellmaterial bestehendes, in Fig. 13 ersichtliches Meistermodell 281 gebildet, in welchem der aus dem Abformmaterial 255 herausragende Abschnitt des Manipuliersupports 263 und insbesondere dessen Verankerungspartie 265 verankert ist. Ein Zahntechniker oder eine sonstige Person bewegt nun den Löffel 253 mit dem Abformmaterial 255 und dem Abformelement 100 ungefähr parallel zur Achse des Manipuliersupports 263 von diesem und vom Meistermodell 281 weg. Dabei werden die Rastmittel des Abformelements ausgerastet. Dann wird ein in Fig. 14 ersichtliches Aufbauelement 285 lösbar am Meistermodell 281 befestigt und auf diesem aufgebaut. Das Aufbauelement 285 kann beispielsweise eine metallische Kappe und eine Verblendung aus Porzellan aufweisen, mit einer Okklusalschraube lösbar am Manipuliersupport befestigt sein, mit einer Auflagefläche auf der Schulter 267 aufliegen und eine Krone für einen künstlichen Einzelzahn bilden. Wenn das Aufbauelement 285 die gewünschte Form hat, wird er vom Manipuliersupport entfernt, in den Mund des Patienten eingebracht und beispielsweise mit einer Okklusalschraube am Support 3 befestigt, wonach er spaltfrei auf der Schulter 17 des Supports 3 aufliegt.

Der in Fig. 15 ersichtliche Knochen 300 des Unterkiefers eines Patienten ist von Weichgewebe 301 bedeckt und mit zwei Löchern versehen, in denen die Verankerungspartien von zwei Supporten 3 verankert sind. Diese sind schief zueinander und divergieren von den Verankerungspartien 15 zu den Köpfen 21 hin, so dass die Achsen 5 der beiden Supporte miteinander einen beispielsweise ungefähr 40° betragenden Winkel bilden. An jedem Support 3 ist ein für die Freipositionierung ausgebildetes Abformelement 50 angeklipst, das auf Schulter 17 des Supports aufliegt und zusammen mit diesem eine Vorrichtung 1 bildet. Nach dem Befestigen der Abformelemente 50 an den Supporten 3 wird ein mit Abformmaterial 305 gefüllter Abformlöffel 303 gegen das Weichgewebe gedrückt, so dass die beiden Abformelemente 50 im Abformmaterial eingebettet werden. Wenn sich das Abformmaterial verfestigt hat, bewegt der Zahnarzt den Abformlöffel 303 zusammen mit den beiden im Abformmaterial eingebetteten Abformelemente 50 in der durch den Pfeil 307 bezeichneten Richtung vom Knochen und Weichgewebe weg. Diese Richtung ist beispielsweise ungefähr parallel zur Winkelhalbierenden zwischen den beiden Achsen 5.

Eines der Abformelemente 50 ist in Fig. 16 strichpunktiert in auf der Schulter 17 aufliegendem Zustand und mit vollen Linien in einem Zustand gezeichnet, in dem die Kappe 67 der Rastmittel 65 aus der Ringnut 24 bzw. Hinterschneidung 31 des Supports 3 ausgerastet wurde und am zylindrischen Abschnitt 22 des Kopfs 21 des Supports 3 anliegt. Wie man in Fig. 16 sehen kann, werden die federnden Rastmittel dabei asymmetrisch deformiert. Die beschriebene Ausbildung des Kopfs 21 des Supports und der Rastmittel 65 des Abformelements ermöglicht jedoch eben, zwei Abformelemente auch dann gleichzeitig und in gleicher Richtung von Supporten 3 zu trennen, wenn die Achsen der letzteren einen bis etwa 40° betragenden Winkel miteinander bilden. Im übrigen werden beim Wegnehmen der Abformelemente von den Supporten dann zwar auf die Seite gerichtete Kräfte auf die Abformelemente ausgeübt. Diese Kräfte bewirken zwar die erwähnte, asymmetrische Verformung der flexiblen Rastmittel, wirken sich aber gewissermassen nur im Innern der Abformelemente aus, so dass sie die Genauigkeit der Abformung nicht beeinträchtigen. Die Abformung kann dann zur Bildung eines Meistermodells dienen, mit dessen Hilfe beispielsweise eine Brücke oder eine Teil- oder Vollprothese hergestellt wird.

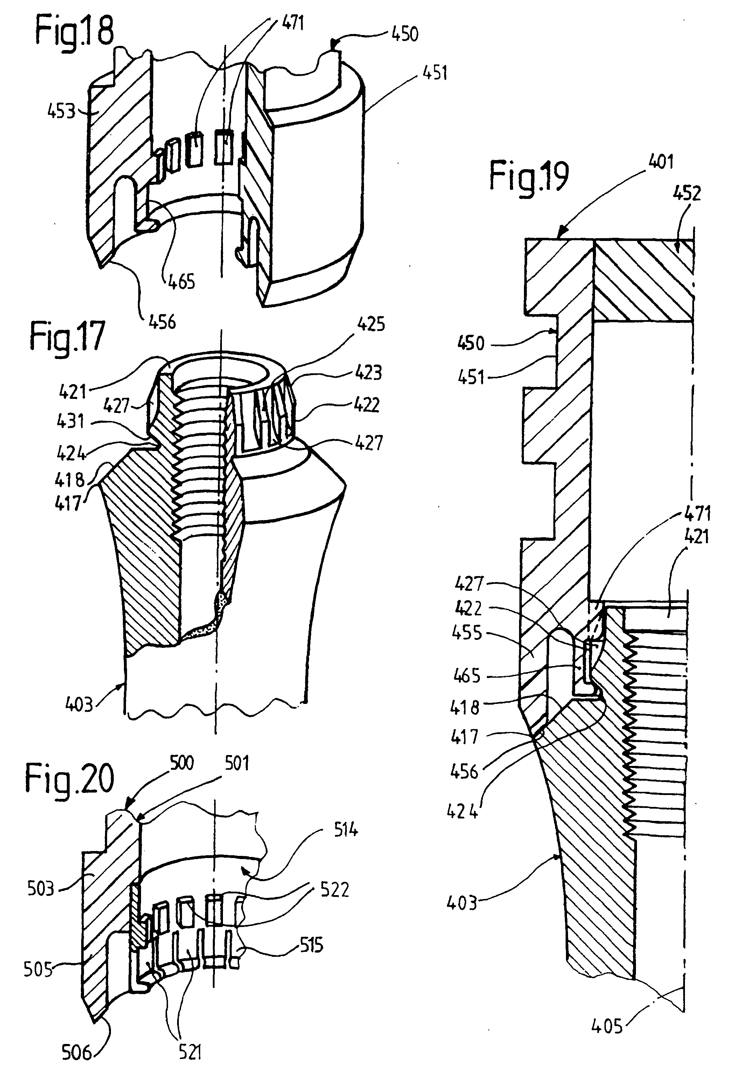

Die in Fig. 19 ersichtliche Vorrichtung 401 weist einen noch separat in Fig. 17 gezeichneten Support 403 und ein separat in Fig. 18 gezeichnetes Abformelement 450 auf. Der Support 403 besteht wie der Support 3 aus einem einstückigen Implantat, definiert eine Achse 405 und besitzt eine Schulter 417 mit einer konischen Schulterfläche 418 und einen Kopf 421 mit einem zylindrischen Abschnitt 422 sowie einem konischen Abschnitt 423. Der Kopf 421 ist durch eine Ringnut 424 von der Schulter 417 getrennt und besitzt entlang seinem Umfang abwechselnd aufeinander folgende Positionierungsvorsprünge 425 und Positionierungsausnehmungen 427. Dabei sind wiederum mehrere gleich ausgebildete erste Ausnehmungen 427 und eine nicht sichtbare, breitere zweite Ausnehmung vorhanden. Die Positionierungsausnehmungen 427 verlaufen vom oberen Ende des Kopfs 421 entlang von axialen Ebenen, unterscheiden sich jedoch von den Ausnehmungen des Supports 3 dadurch, dass ihr Grund im Axialschnitt mindestens zum Teil gebogen ist und dass sie über dem unteren Ende des zylindrischen Abschnitts 422 in dessen Umfangsfläche auslaufen. Die Ausnehmungen 427 können beispielsweise mit einem Scheibenfräser in den Kopf eingefräst werden. Die Ringnut 424 bildet auf ihrer oberen Seite eine Hinterschneidung 431 des zylindrischen Abschnitts 422 des Kopfs. Die Hinterschneidung 431 wird bei diesem Support durch die Ausnehmungen 427 nicht unterteilt und besteht also vollständig aus einer zusammenhängenden Ringfläche und dient als Halte- und/oder Verbindungsabschnitt 431.

Das Abformelement 450 besteht aus einer Hülse 451 und aus einem diese oben verschliessenden Verschlusselement 452 und hat eine formfeste Wand 453 mit einem Auflageabschnitt 455 sowie einer konischen Auflagefläche 456 und mit dem Auflageabschnitt zusammen aus einem einstückigen Körper bestehende Haltemittel und/oder Rastmittel 465. Das Abformelement 450 ist beispielsweise für die Multipositionierung ausgebildet und besitzt einen Kranz von identisch ausgebildeten Positionierungsvorsprüngen 471. Diese sind so bemessen, dass sie in die oberen Endabschnitte der Positionierungs-ausnehmungen 427 des Supports 403 eingreifen können. Die Vorsprünge 471 haben Innenflächen, von denen beispielsweise mindestens die unteren Abschnitte abwärts nach aussen geneigt sind.

Das in Fig. 20 ersichtliche Abformelement 500 besitzt eine einstückige Kappe 501 mit einer formfesten Wand 503, die am unteren Ende einen Auflageabschnitt 505 mit einer ringförmigen, konischen Auflagefläche 506 bildet. Das Abformelement 500 besitzt ferner einen ring- und/oder hülsenförmigen Einsatz 514, der analog wie der Einsatz 214 des in Fig. 8 dargestellten Abformelements angeordnet sowie befestigt ist und Halte- und/oder Rastmittel 515 mit federnden Zungen 521 aufweist. Der Einsatz 514 unterscheidet sich jedoch vom Einsatz 214 dadurch, dass er oberhalb der Halte- und/odeer Rastmittel noch einen Positionierungsabschnitt mit einem Kranz von entlang seinem Umfang verteilten Positionierungsvorsprüngen 522 aufweist. Diese sind beispielsweise zum Support 403 passend und für die Multipositionierung ausgebildet.

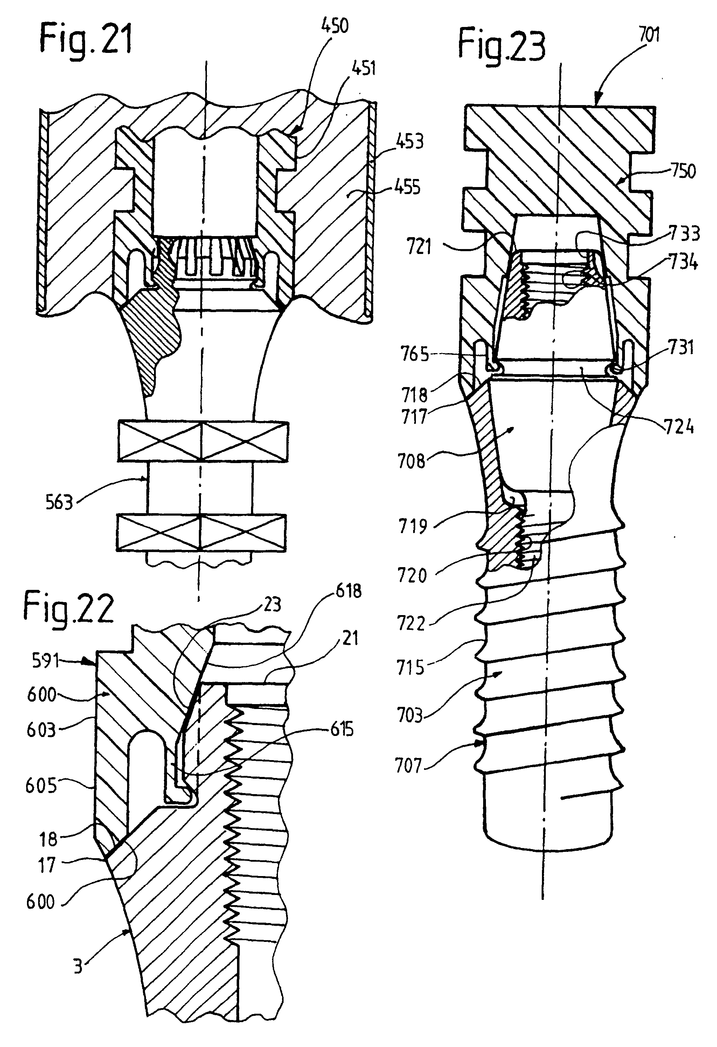

Wenn der Support 403 in einem Knochen verankert und gemäss Fig. 19 mit einem Abformelement 450 verbunden ist, kann mit einem in Fig. 21 gezeichneten Abformlöffel 553, der Abformmaterial 555 enthält, eine Abformung bzw. ein Abdruck gemacht werden. Nach dem Herausnehmen des Löffels und des in das Abformmaterial 555 eingebetteten Abformelements 450 wird dieses an einem in Fig. 21 ersichtlichen Manipuliersupport 563 angeklipst, dessen Schulter und Kopf gleich ausgebildet sind wie beim Support 403.

Die in Fig. 22 ersichtliche Vorrichtung 591 besitzt einen gleich wie der Support gemäss den Figuren 1 bis 4 ausgebildeten Support 3 und ein Abformelement 600 mit einer formfesten Wand 603. Diese hat am unteren Ende einen Auflageabschnitt 605 mit einer ringförmigen, konischen Auflagefläche 606. Das Abformelement 600 hat mit dem Auflageabschnitt 605 zusammen aus einem einstückigen Körper bestehende Haltemittel und/oder Rastmittel 615 und oberhalb dieser einen konischen Innenflächenabschnitt 618, der gegen oben nach innen geneigt ist. Wenn das Abformelement 600 am Support 3 angeklipst ist, bildet der Innenflächenabschnitt 618 mit der Achse des Supports 3 den gleichen Winkel wie die Umfangsfläche des konischen Abschnitts 23 des Supports 3. Das Abformelement 600 liegt dann mit seiner Auflagefläche 606 spaltfrei auf der Schulterfläche 18 auf. Ferner wird der konische Innenflächenabschnitt 618 des Abformelements 600 mit sehr kleinem Spiel vom konischen Abschnitt 23 Supports bis zum oberen, freien Ende des Kopfs 21 abgestützt sowie zentriert, wodurch die Verbindung des Abformelements mit dem Support zusätzlich stabilisiert wird. Das Abformelement kann trotz dieser zusätzlichen Abstützung beim oberen Ende des Kopfs auch dann gut vom Support 3 entfernt werden, wenn gleichzeitig zwei Abformelemente von schief zueinander angeordneten Supporten entfernt werden. Das Abformelement 600 ist zum Beispiel für die Freipositionierung vorgesehen, könnte aber auch noch Positionierungsvorsprünge für die Multi- oder Einzelpositionierung aufweisen.

Die in Fig. 23 ersichtliche Vorrichtung 701 besitzt einen Support 703, der ein einstückiges Implantat 707 und einen ursprünglich separaten Sekundärteil 708 aufweist. Das Implantat 707 bildet die mit einem Aussengewinde versehene Verankerungspartie 715 und die eine ringförmige, konische Schulterfläche 718 aufweisende Schulter 717 des Supports 703. Das Implantat ist mit einem in sein oberes Ende mündendes Sackloch 719 versehen, das einen Abschnitt mit einem Innengewinde 720 aufweist. Das Implantat 707 hat an seinem unteren Ende beispielsweise einen vollen Querschnitt ohne Hohlraum. Der Sekundärteil 708 besitzt einen im Sackloch 719 angeordneten und mit dessen Innengewinde 720 verschraubten Innen- und/oder Verbindungsabschnitt 722 und einen aus dem Implantat herausragenden Abschnitt, der den Kopf 721 des Supports bildet. Der Kopf 721 ist zum Beispiel im allgemeinen konisch, verjüngt sich nach oben und weist entlang seiner konischen Umfangsfläche verteilte Positionierungsvorsprünge und -ausnehmungen auf. Der Sekundärteil 708 ist zwischen dem Innen- und/oder Verbindungsabschnitt 722 und dem Kopf 721 mit einer sich ein wenig oberhalb der Schulterfläche 718 befindenden Ringnut 724 versehen, deren obere Flanke eine Hinterschneidung 731 bildet und als Halte- und/oder Verbindungsabschnitt dient. Der Sekundärteil besitzt ferner ein axiales Sackloch 733 mit einem Innengewinde 734. Die Vorrichtung 701 besitzt ein Abformelement 750 mit Halte- bzw. Rastmitteln 765 und einem konischen Innenflächenabschnitt, der an der Umfangsfläche des Kopfs 721 anliegt. Das Abformelement 750 ist beispielsweise für die Freipositionierung ausgebildet.

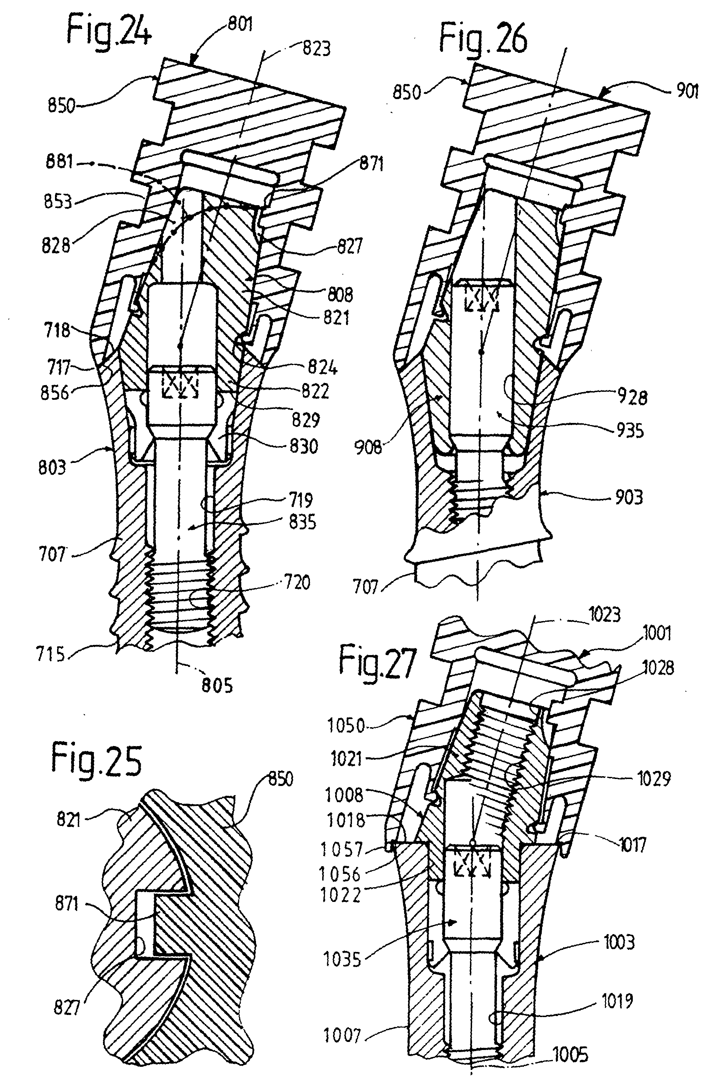

Die in Fig. 24 gezeichnete Vorrichtung 801 besitzt einen Support 803 mit einem Implantat, das beispielsweise gleich wie das in Fig. 23 gezeichnete Implantat ausgebildet und wie dieses mit 707 bezeichnet ist und eine Achse 805 definiert, zu der die vom Implantat gebildete Verankerungspartie 715 sowie Schulter 717 im allgemeinen rotationssymmetrisch sind. Der Sekundärteil 808 des Supports 803 ist abgewinkelt und besitzt einen im Sackloch 719 des Implantats 707 sitzenden, im allgemeinen zur Achse 805 rotationssymmetrischen Innen- und/oder Verbindungsabschnitt 822 sowie einen sich ausserhalb des Implantats befindenden Kopf 821. Der Kopf 821 ist koaxial sowie im allgemeinen rotationssymmetrisch zu einer mit der Achse 805 einen Winkel bildenden Achse 823 und mit einer zu dieser rotationssymmetrischen, sich ein wenig oberhalb der Schulterfläche 718 des Implantats befindenden Ringnut 824 versehen, deren obere Flanke eine Hinterschneidung bildet. Der Kopf verjüngt sich nach oben konisch und ist in der Nähe seines oberen Endes mit einer eingefrästen, auch in Fig. 25 ersichtlichen Positionierungsausnehmung 827 versehen, die sich vorzugsweise auf der Innenseite des von den Achsen 805 und 823 gebildeten Winkels befindet. Der Sekundärteil 808 ist mit einem durchgehenden, zur Achse 805 koaxialen Loch 828 versehen und bei seinem unteren Endabschnitt durch axiale Einschnitte 829 in federnde Zungen 830 unterteilt. Eine Schraube 835 besitzt einen Kopf, der unter einer vorübergehenden Spreizung der Zungen des Sekundärteils von unten her in dessen Loch 828 eingesetzt werden kann und dann auf einer von den Zungen gebildeten Verengung des Lochs aufliegt. Die Vorrichtung 801 besitzt ein Abformelement 850. Dieses hat eine im allgemeinen zur Achse 823 koaxiale und rotationssymmetrische Wand 853, besitzt jedoch an seinem unteren Ende eine zur Achse 805 koaxiale und rotationssymmetrische Auflagefläche 856. Die Halte- und/oder Rastmittel 865 des Abformelements 850 sind im allgemeinen rotationssymmetrisch zur Achse 823 und greifen bei zusammengebauter Vorrichtung an der von der oberen Flanke der Ringnut 824 gebildeten Hinterschneidung an, so dass sie das Abformelement 850 gegen die Schulterfläche 718 des Implantats drücken. Das Abformelement 850 hat oberhalb der Halte- bzw. Rastmittel 865 einen konischen Innenflächenabschnitt, der mit kleinem Spiel von der konischen Fläche des Kopfs 821 gehalten wird. Das Abformelement 850 hat ferner einen auch in Fig. 25 ersichtliche Positionierungsvorsprung 871, der in die Positionierungsausnehmung 827 hineinragt. Der Kopf 821 des Sekundärteils 808 kann nötigenfalls für die Bildung eines Aufbaus vor oder nach dem Anklipsen eines Abformelements 850 beschliffen werden, so dass seine konische Umfangsfläche und/oder seine ebene Stirnfläche teilweise durch eine geschliffene, strichpunktiert angedeutete Fläche 881 ersetzt wird. Das Abformelement 850 kann auch dann noch stabil am Support 803 befestigt werden, wenn der Kopf 821 von der Befestigung des Abformelements beschliffen wurde. Im übrigen kann der Kopf des Manipuliersupports dann analog beschliffen werden.

Die in Fig. 26 gezeichnete Vorrichtung 901 weist einen Support 903 auf. Dieser ist ähnlich wie der Support 803 gemäss Fig. 24 ausgebildet und besitzt ein Implantat 707, einen abgewinkelten, ein durchgehendes Loch 928 aufweisenden Sekundärteil 908 und eine Schraube 935. Der Sekundärteil 907 unterscheidet sich von dem in Fig. 24 ersichtlichen Sekundärteil 808 dadurch, dass er keine den Einschnitten 829 entsprechende Einschnitte besitzt und derart ausgebildet ist, dass die Schraube 935 von oben her in das Loch 928 eingesetzt werden kann. Die Vorrichtung 901 weist ferner ein Abformelement 850 auf, das gleich ausgebildet ist wie das in Fig. 24 ersichtliche Abformelement.

Die in Fig. 27 gezeichnete Vorrichtung 1001 besitzt einen Support 1003 mit einem im wesentlichen zu einer Achse 1005 rotationssymmetrischen Implantat 1007 und einem abgewinkelten Sekundärteil 1008. Das Implantat 1007 hat eine Schulter 1017 mit einer ringförmigen, ebenen, zur Achse 1005 rechtwinkligen Schulterfläche 1018 und ein in sein oberes Ende mündendes, abgestuftes Sackloch 1019. Der Sekundärteil 1008 hat einen im Sackloch 1019 sitzenden Innen- und/oder Verbindungsabschnitt 1022 und einen Kopf 1021. Dieser ist im allgemeinen rotationssymmetrisch zu einer mit der Achse 1005 einen Winkel bildenden Achse 1023, hat jedoch bei seiner Verbindung mit dem Abschnitt 1022 eine ringförmige, ebene, zur Achse 1005 rechtwinklige Auflagefläche, die auf dem inneren Bereich der Schulterfläche 1018 aufliegt. Der Sekundärteil 1008 besitzt ferner ein durchgehendes Loch 1028, dessen unterer Abschnitt koaxial zur Achse 1005 und dessen oberer Abschnitt koaxial zur Achse 1023 und mit einem Innengewinde 1029 versehen ist. Der Sekundärteil 1008 ist an seinem unteren Ende durch Einschnitte in spreizbare Zungen unterteilt und mit einer Schraube 1035 lösbar am Implantat 1008 befestigt, deren Kopf analog wie bei der in Fig. 24 ersichtlichen Vorrichtung von unten her in den Sekundärteil eingeführt werden kann. Das Abformelement 1050 der Vorrichtung 1001 besitzt eine ringförmige, ebene Auflagefläche 1056, die bei zusammengebauter Vorrichtung rechtwinklig zur Achse 1005 ist und auf dem äusseren Bereich der Schulterfläche 1018 aufliegt. Das Abformelement 1050 hat am unteren Ende ferner einen kragenförmigen Fortsatz 1057, der beim äusseren Rand der Auflagefläche 1056 koaxial zur Achse 1005 nach unten ragt, den Aussenrand der Schulterfläche 1018 mit höchstens kleinem, radialem Spiel übergreift und das untere Ende des Abformelements koaxial zur Achse 1005 zentriert. Bei der Verwendung des Abformelements 1050 drückt der Fortsatz 1057 zudem das die Schulter 1017 umgebende Weichgewebe des Patienten nach unten, so dass man auf das sonst oft erforderliche, sogenannte Fadenlegen, d.h. Fixieren des Weichgewebes mit Hilfe eines Fadens, verzichten kann. Die in Fig. 27 gezeichnete Vorrichtung 1001 kann beispielsweise zusammen mit mindestens einer weiteren, identisch ausgebildeten Vorrichtung zur Bildung einer Brücke dienen.

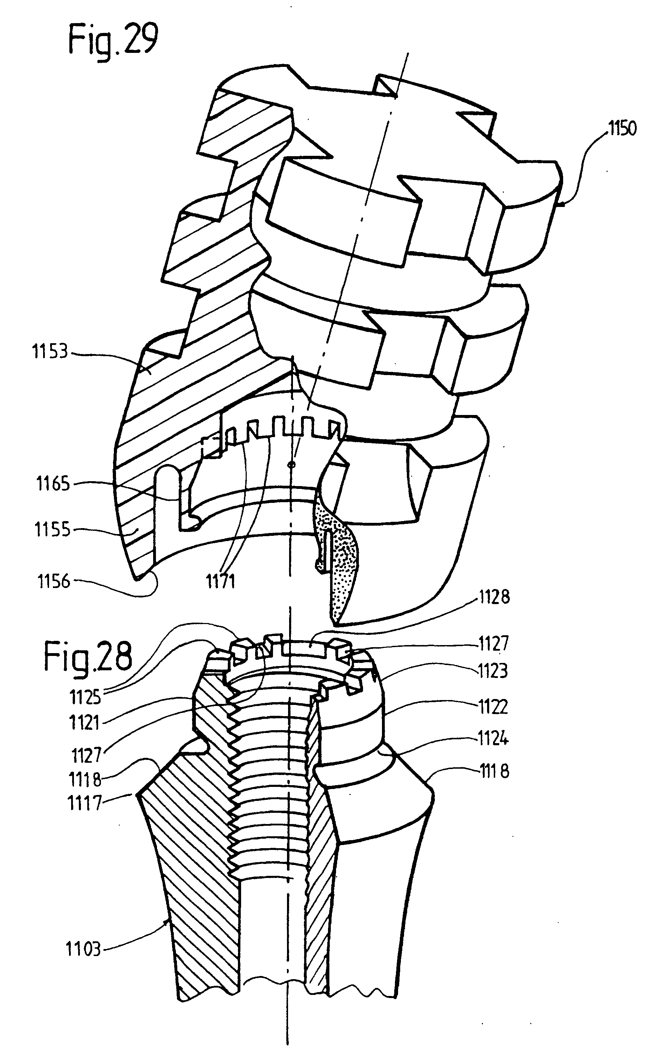

Der in Fig. 28 ersichtliche Support 1103 besteht aus einem einstückigen Implantat und besitzt eine Schulter 1117 mit einer konischen Schulterfläche 1118 sowie einen Kopf 1121 mit einem zylindrischen Abschnitt 1122 und einem konischen Abschnitt 1023. Zwischen der Schulter 1117 und dem Kopf 1121 ist eine Ringnut 1124 vorhanden. Die ringförmige Stirnfläche am freien Ende des Kopfs ist mit entlang dem Umfang abwechselnd aufeinander folgenden Positionierungsvorsprüngen 1125 und Positionierungsausnehmungen 1127, 1128 versehen, wobei mehrere erste, gleich ausgebildete Ausnehmungen 1127 und eine zweite, breitere Ausnehmung 1128 vorhanden sind.

Das in Fig. 29 gezeichnete, kappenförmige Abformelement 1150 hat eine Wand 1153, die am unteren Ende einen Auflageabschnitt 1155 mit einer konischen Auflagefläche 1156 besitzt. Das Abformelement hat ferner Halte- und/oder Rastmittel 1165 sowie Positionierungsvorsprünge 1171. Das Abformelement 1150 passt zu dem in Fig. 28 gezeichneten Support 1103 und kann an diesem angeklipst werden. Die Positionierungsvorsprünge 1171 greifen dann in die Positionierungsausnehmungen 1127, 1128 ein. Die Positionierungsvorsprünge 1171 sind alle gleich ausgebildet und ermöglichen eine Multipositionierung, könnten jedoch auch für eine Einzelpositionierung ausgebildet sein oder weggelassen werden. Wenn das Abformelement 1150 am Support 1103 befestigt ist, sind der Auflageabschnitt 1155, die Auflagefläche 1156 und die Halte- und/oder Rastmittel 1165 koaxial zur Achse des Supports, während der obere Hauptteil des Abformelements gegen den Support abgewinkelt ist.

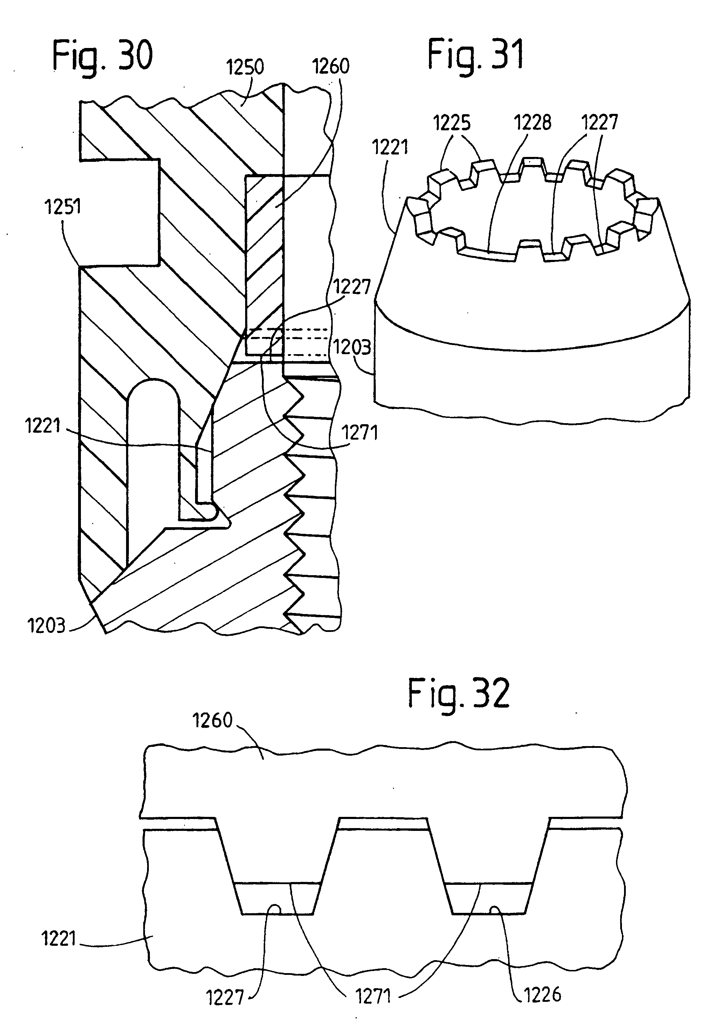

Die in den Figuren 30, 31, 32 gezeichnete Vorrichtung besitzt einen Kopf 1221. Der letztere hat Positionierungsvorsprünge 1225, erste Positionierungsausnehmungen 1227 und eine zweite Positionierungsausnehmung 1327. Der Support 1203 ist ähnlich ausgebildet wie der Support 1103, unterscheidet sich aber von diesem dadurch, dass die Vorsprünge 1225 und die Ausnehmungen 1227, 1228 in radialen Blickrichtungen trapezförmig sind. Die beiden Seitenflächen jeder Ausnehmung 1227, 1228 sind von deren Grund weg nach oben voneinander weg geneigt, so dass die Ausnehmung sich von Grund weg erweitert.

Das Abformelement 1250 hat eine einstückige Kappe 1251 und einen ursprünglich separaten, in deren Innenraum angeordneten, in einem hohlzylindrischen Abschnitt der Kappe befestigten, nämlich eingepressten und/oder eingeklebten, hülsenförmigen, im wesentlichen hohlzylindrischen Positionierungseinsatz 1260. Dieser ist am unteren Ende mit Positionierungsvorsprüngen 1271 versehen, die beispielsweise alle gleich und für die Multipositionierung ausgebildet sind. Die Vorsprünge 1271 sind in radialen Blickrichtungen trapezförmig und derart ausgebildet, dass ihre Seitenflächen bei zusammengebauter Vorrichtung mit höchstens sehr kleinem Spiel zwischen die Seitenflächen der ersten Ausnehmungen 1227 des Support-Kopfs 1221 hineinragen.

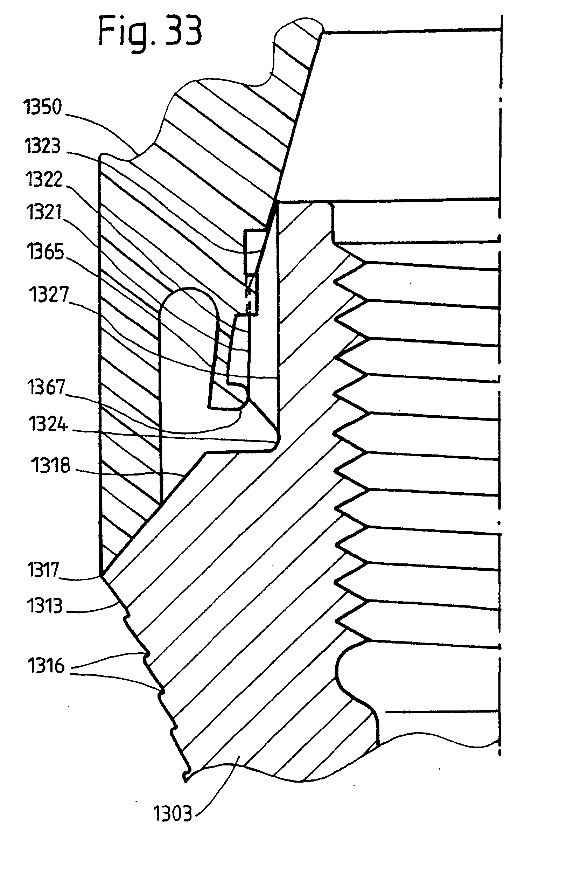

Die in Fig. 33 ersichtliche Vorrichtung besitzt einen Support 1303. Dessen sich zur Schulter 1317 hin erweiternder, trompetenförmiger Abschnitt 1313 ist mit einigen in axialer Richtung voneinander in Abstand stehenden Vertiefungen 1316, nämlich ringförmigen Rillen versehen. Der Support 1303 ist abgesehen von diesen Vertiefungen bzw. Rillen im wesentlichen gleich ausgebildet wie der Support 3 und besitzt wie dieser eine konische Schulterfläche 1318 und einen Kopf 1321 mit einem im allgemeinen zylindrischen Abschnitt 1322, einem konischen Abschnitt 1323 sowie eine zwischen der Schulterfläche 1318 und dem zylindrischen Abschnitt 1322 angeordnete Ringnut 1324. Die beiden Abschnitte 1322, 1323 sind mit Positionierungsausnehmungen versehen, von denen eine der ersten Positionierungsausnehmungen 1327 ersichtlich ist.

Das in Fig. 33 ersichtliche Abformelement 1350 ist ähnlich wie das Abformelement 50 ausgebildet, hat jedoch noch eine auf dem oberen Ende des konischen Kopfabschnitts 1323 aufliegende, konische Innenfläche und für die Multi- oder Einzelpositionieung ausgebildete Positionierungsvorsprünge. Die Haltemittel 1365 sind teilweise ähnlich wie die Halte- und/oder Rastmittel 65, 115 ausgebildet und haben einen dünnen, hülsenförmigen, deformierbaren Abschnitt und am unteren Ende von diesem eine ungefähr radial gegen innen vorstehende Nase 1367. Wenn das Abformelement auf der Schulterfläche 1318 aufliegt, greift die Nase 1367 jedoch nicht in die Ringnut 1324 ein. Die Nase 1367 ist bei dieser Variante nämlich nur am unteren Ende des zylindrischen Abschnitts 1322 an dessen zylindrischer Umfangsfläche angeklemmt. Die elastische Deformation des hülsenförmigen, im entspannten Zustand zylindrischen Abschnitts der Haltemittel 1365 erzeugt dabei die erforderliche Vorspannung bzw. Klemmkraft. Im übrigen könnten die Haltemittel 1365 analog wie die in der Fig. 8 ersichtlichen Haltemittel 215 durch Einschnitte in Zungen unterteilt sein.

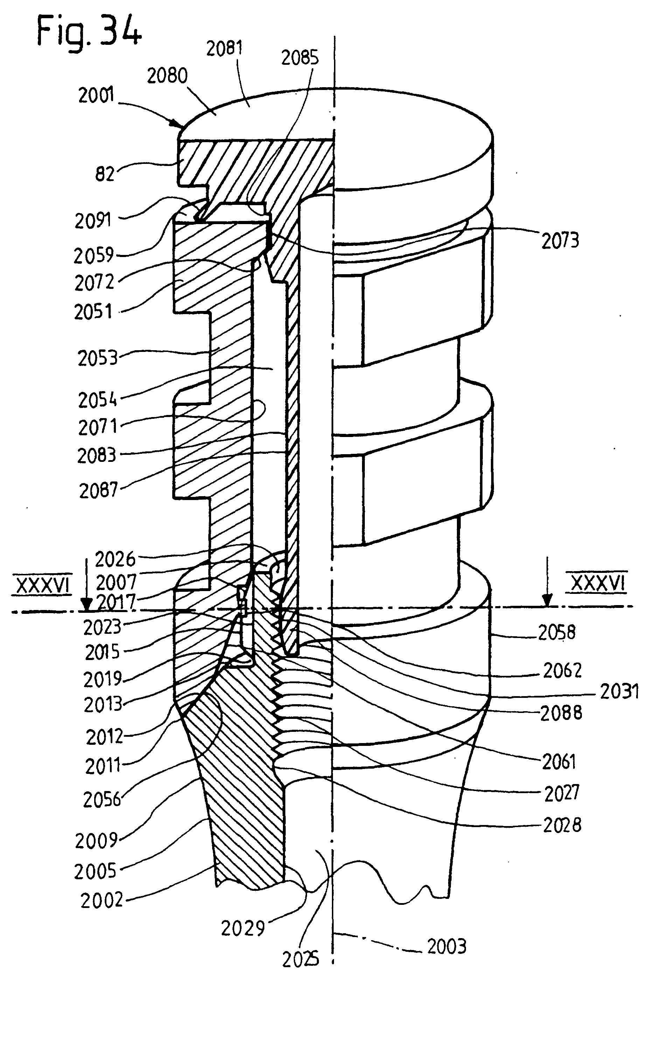

Die in den Figuren 34 bis 37 ersichtliche Vorrichtung 2001 besitzt einen Support 2002. Dieser ist im wesentlichen identisch ausgebildet wie der Support 3 und besteht ausschliesslich aus einem ebenfalls mit 2002 bezeichneten, einstückigen Implantat. Dieses besteht aus einem metallischen Material, beispielsweise Titan. Das Implantat 2002 hat eine Achse 2003 und ist im wesentlichen rotationssymmetrisch zu dieser. Das Implantat 2002 hat unten eine Verankerungspartie 2005 und oben einen Kopf 2007. Das freie Ende des Kopfs bildet das obere Ende des ganzen Implantats 2002. Die Verankerungspartie 2005 hat unten einen nicht sichtbaren, im allgemeinen zylindrischen Abschnitt mit einem Aussengewinde und einen sich vom im allgemeinen zylindrischen Abschnitt weg nach oben erweiternden, trompetenförmigen Abschnitt 2009.

Am oberen, weiteren Ende des trompetenförmigen Abschnitts 2009 ist eine Schulter 2011 mit einer nach oben zum Kopf hin gegen innen geneigten, konischen Schulterfläche 2012 vorhanden. Diese bildet mit der Achse 2003 einen Winkel von 40° bis 50° und beispielsweise 45°. An das obere, engere Ende der konischen Schulterfläche 2012 schliesst eine ebene, zur Achse 2003 rechtwinklige Ringfläche 2013 an.

Der Kopf 2007 ragt von der Ringfläche 2013 weg nach oben und hat einen im wesentlichen zur Achse 2003 parallelen, im allgemeinen zylindrischen Kopfabschnitt 2015 und einen sich von diesem weg nach oben zum freien Ende des Kopfs hin verjüngenden, im allgemeinen konischen Kopfabschnitt 2017. Der zur Achse parallele Kopfabschnitt 2015 ist durch eine im Axialschnitt konkav gebogene Ringnut 2019 vom oberen Ende der Schulter 2011 abgegrenzt. Der Kopf hat an seinem freien Ende eine ebene, ringförmige Stirnfläche. Die beiden Kopfabschnitte 2015, 2017 sind im allgemeinen rotationssymmetrisch zur Achse 2003 und/oder haben zumindest je eine zur Achse rotationssymmetrische, nämlich zylindrische bzw. konische Hüllfläche. Die beiden Kopfabschnitte 2015, 2017 bilden jedoch zusammen einen Postionierungsabschnitt und sind mit um die Achse 2003 herum verteilten, zu dieser parallelen Positionierungsausnehmungen bzw. -nuten 2023 versehen. Diese bilden bei diesem Ausführungsbeispiel jedoch in einem zur Achse 2003 rechtwinkligen Querschnitt konkav gebogene Positionierungsflächen. Die Positionierungsnuten 2023 - oder mindestens die im Querschnitt tiefsten Bereiche von diesen - erstrecken sich über die ganze Länge des zur Achse 2003 parallelen Kopfabschnitts 2015 und mindestens annähernd sowie beispielsweise genau zum dünneren Ende des konischen Kopfabschnitts 2017 und also auch bis zum freien Ende des Kopfs und damit bis zum oberen Ende des ganzen Implantats. Der sich im Bereich des achsparallelen Kopfabschnitts 2015 befindende Abschnitt jeder Positionierungsnut 2023 bildet im Querschnitt einen Kreisbogen, der höchstens einen Halbkreis bildet und nämlich kleiner als ein Halbkreis ist. Die sich im Bereich des im allgemeinen konischen Kopfabschnitts 2017 befindenden Abschnitte der Positionierungsnuten 2023 bilden dann kleinere Kreisbogen und laufen beim dünneren Ende des konischen Kopfabschnitts in das freie Ende des Kopfs aus. Die beiden Kopfabschnitte 2015, 2017 haben zwischen den Postionierungsnuten 2023 Flächenabschnitte, die Teile einer Zylinder- bzw. Konusfläche bilden. Die Positionierungsnuten 2023 weisen vorzugsweise mehrere identische erste Positionierungsnuten sowie eine zweite, breitere und tiefere Positionierungsnut auf, könnten jedoch eventuell alle gleich ausgebildet und bemessen sein.

Die konische Mantelfläche des im allgemeinen konischen Kopfabschnitts 2017 bildet mit der Achse 2003 einen Winkel, der kleiner als der von der konischen Schulterfläche 2012 mit der Achse 2003 gebildete Winkel und derart auf den Abstand des konischen Kopfabschnitts von der Schulter abgestimmt ist, dass die Verlängerung der vom konischen Kopfabschnitt definierten Konusfläche die Schulter 2011 innerhalb des äusseren Randes der konischen Schulterfläche 2012 kreuzt und nämlich beispielsweise die innere Hälfte der konischen Schulterfläche 2012 oder eventuell die ebene Ringfläche 2013 kreuzt. Die axiale Abmessung bzw. Höhe des Kopfs 7 beträgt - von der ebenen Ringfläche 2013 bis zum freien Ende des Kopfs gemessen - höchstens 2 mm, vorzugsweise 1,2 mm bis 1,8 mm und zum Beispiel ungefähr 1,5 mm. Die axialen Abmessungen des achsparallelen Kopfabschnitts 2025 und der Ringnut 2029 betragen zusammen beispielsweise ungefähr 1 mm. Die axiale Abmessung des im allgemeinen konischen Kopfabschnitts 2017 beträgt zum Beispiel ungefähr 0,5 mm.

Das Implantat 2002 ist mit einem zur Achse 2003 koaxialen Sackloch 2025 versehen. Dieses besitzt eine sich beim freien Ende des Kopfs befindende, durch einen sehr kurzen, zylindrischen Lochabschnitt gebildete Mündung 2026 und von dieser weg nach unten der Reihe nach ein beispielsweise metrisches Innengewinde 2027, eine Rille 2028, einen zylindrischen, glatten, d. h. gewindelosen Lochabschnitt 29 und einen nicht sichtbaren Grund.

Die Vorrichtung 2001 weist ferner ein Abformelement bzw. eine Abformkappe 2051 auf. Dieses ist hülsenförmig und hat eine formfeste Wand 2053, die einen gegen unten und oben offenen Innenraum 2054 begrenzt. Der unterste, im Querschnitt ringförmige Bereich der Wand 2053 bildet einen Auflageabschnitt 2055 und hat an seinem freien Ende eine ringförmige, konische Auflagefläche 2056. Deren Aussenrand bildet die tiefste Stelle der Abformkappe und begrenzt die Öffnung, bei welcher der Innenraum 2054 in die Umgebung der Abformkappe 2051 mündet. Wenn die letztere mit dem Support bzw. Implantat 2002 verbunden ist, bildet die Auflagefläche 2055 mit der Achse 2003 den gleichen Winkel wie die Schulterfläche 2012 und liegt spaltfrei mindestens auf einem Teil von dieser auf, wobei die beiden Flächen 2012, 2056 insbesondere bis zu ihren Aussenrändern aufeinander aufliegen. Die Mantel- und/oder Aussenfläche 2058 des Abformelements hat beim Aussenrand der Auflagefläche 2056 einen Abschnitt, der an die Mantel- und/oder Aussenfläche 2014 des Supports anstösst und von diesem weg nach oben gleich oder ähnlich nach aussen geneigt ist wie der benachbarte Abschnitt der Mantel- und/oder Aussenfläche des trompetenförmigen Abschnitts 2009 des Implantats, so dass die beiden Mantel- und/oder Aussenflächen bei der Schulter 2011 fugenlos, stufenlos und mindestens annähernd glatt sowie stetig aneinander anschliessen. An den geneigten, nur kurzen Abschnitt der Mantel- und/oder Aussenfläche 2058 schliesst dann der im allgemeinen zylindrische Hauptabschnitt der Fläche 2058 an. Dieser Hauptabschnitt ist jedoch mit Ringnuten und axialen Abflachungen oder Nuten versehen, welche die Aussenform der Abformkappe strukturieren. Die Kappe hat an ihrem oberen, dem Implantat abgewandten Ende eine ringförmige, mit der Achse 2003 einen Winkel bildenden, nämlich zur Achse rechtwinklige, ebene Endfläche, die im folgenden als Haltefläche 2059 bezeichnet wird.

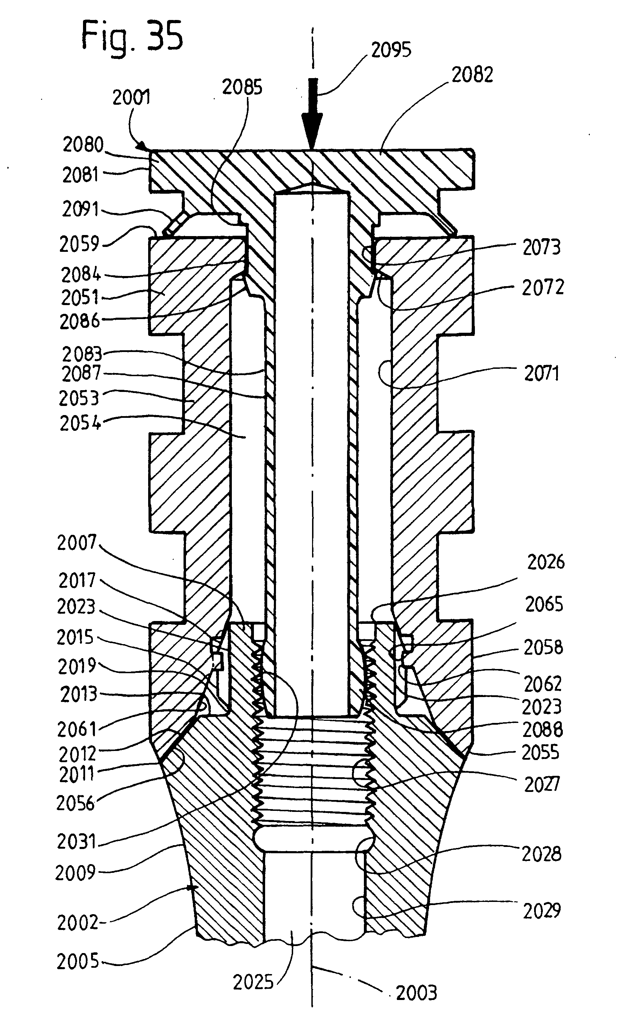

Das Abformelement bzw. die Abformkappe 2051 besitzt innen eine an das obere, dünnere Ende der konischen Auflagefläche 2056 anschliessende, im allgemeinen ebenfalls konische, aber steilere Innenfläche 2061 an. Diese bildet mit der Achse 2003 den gleichen Winkel wie die Konusfläche des im allgemeinen konischen Kopfabschnitts 2017. Die im allgemeinen konische Innenfläche 2061 ist jedoch durch einen besonders deutlich in den Figuren 34 und 35 ersichtlichen Positionierungsabschnitt 2062 in zwei Höhenbereiche unterteilt. Der Positionierungsabschnitt 2062 befindet sich ungefähr in der Höhe, in welcher der achsparallele Kopfabschnitt 2015 mit dem im allgemeinen konischen Kopfabschnitt 2017 verbunden ist. Oberhalb des Positionierungsabschnitts 2062 ist beispielsweise noch eine schmale Ringnut 2063 vorhanden. Die im allgemeinen konische Innenfläche 2061 hat jedoch auf jeden Fall oberhalb des Positionierungsabschnitts 2062 und der Ringnut 2063 einen sich im Höhenbereich bzw. Axialbereich des konischen Kopfabschnitts 2017 befindenden Abschnitt, der mit sehr kleinem Spiel bis zum freien Ende des Kopfs von der Konusfläche des im allgemeinen konischen Kopfabschnitts abgestützt wird.

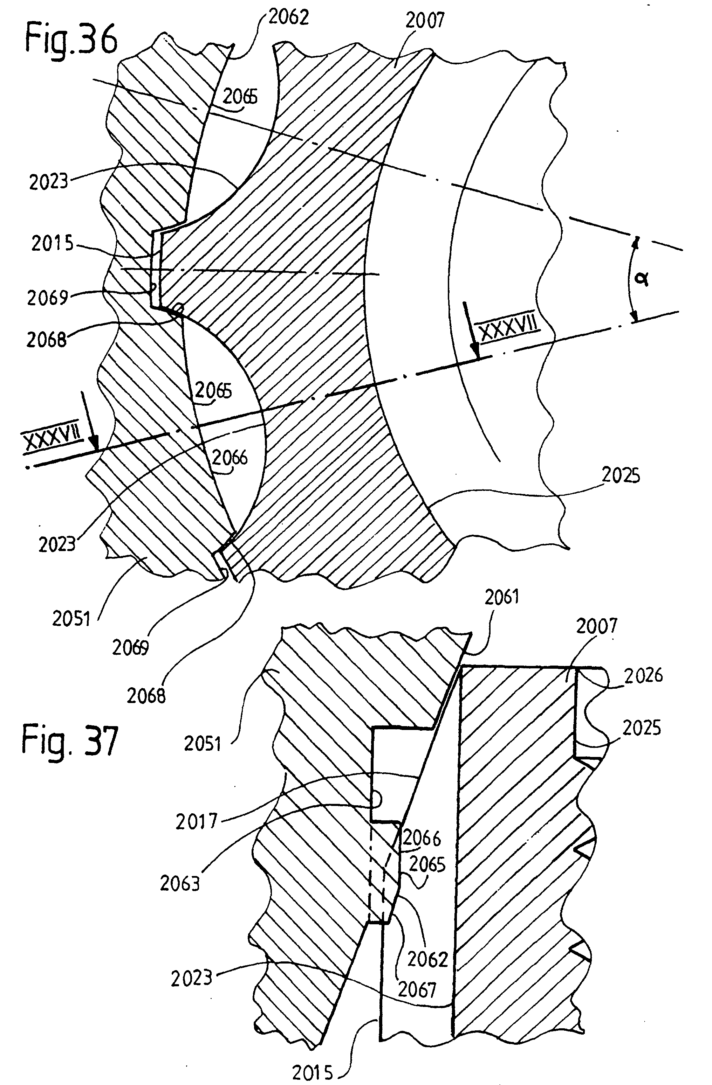

Der Positonierungsabschnitt 2062 weist um die Achse 2003 herum verteilte Postionierungsvorsprünge 2065 auf. Jeder Positionierungsvorsprung 2065 ragt in eine Positionierungsnut 2023 hinein. Die axiale Abmessung jedes Positionierungsvorsprungs 2065 ist wesentlich kleiner als die gesamte axiale Abmessung der beiden Kopfabschnitte 2015, 2017 und beträgt vorzugsweise höchstens 30% der gesamten axialen Abmessung der beiden Kopfabschnitte 2015, 2017 und der Positionierungsnuten sowie selbstverständlich auch des ganzen Kopfs 2007. Die Positionierungsvorsprünge stehen daher in Abstand vom unteren Ende des achsparallelen Kopfabschnitts 2015 und vom oberen Ende des konischen Kopfabschnitts 2017 und befinden sich in der für den Positionierungsabschnitt 2062 angegebenen Höhe. Die Positionierungsvorsprünge haben Scheitelflächen, die in einem zur Achse 2003 rechtwinkligen Querschnitt zur Achse 2003 koaxiale Kreisbogen bilden. Der obere, weiter von der Schulter 11 entfernte Abschnitt jeder Scheitelfläche 2066 ist paralell zur Achse 2003 und besteht aus einem Abschnit einer Zylinderfläche. Jede Scheitelfäche hat im unteren, sich näher bei der Schulter 2011 befindenden Bereich gemäss Fig. 34 eine nach unten gegen aussen geneigte Anschrägung 2067, die durch einen Abschnitt einer Konusfläche gebildet ist. Zwischen jeder Scheitelfläche 2066 und dem Grund der den betreffenden Vorsprung enthaltenden Positionierungsnut 2023 ist ein freier Zwischenraum vorhanden, dessen radiale Abmessung bei der tiefsten Stelle der Nut beispielsweise mindestens gleich der halben Tiefe der Nut ist. Die Seitenflächen 2068 der Positionierungsvorsprünge 2065 sind in einem zur Achse 2003 rechtwinkligen Querschnitt gemäss Fig. 36 bogenförmig und sind höchstens durch sehr schmale Spalte von den Flächen der Nuten 2023 getrennt. Die Vorsprünge 2065 haben also in den Nuten entlang einem zur Achse 2003 konzentrischen Kreis und tangential zu diesem nur ein sehr kleines Spiel. Zwischen den Positionierungsvorsprüngen 2065 der Kappe sind Zwischenräume 2069 vorhanden, in welche die zwischen den Positionierungsnuten 2023 des Kopfs vorhandenen Vorsprünge oder Abschnitte der beiden Kopfabschnitte 2015, 2017 mit ziemlich kleinem, radialem Spiel hineinragen.

Falls alle Nuten 2023 gleich ausgebildet sind, sind auch alle Vorsprünge 2065 identisch ausgebildet. Wie schon beschrieben, können jedoch mehrere identische, erste Positionierungsnuten und eine breitere sowie tiefere, zweite Positionierungsnut vorhanden sein. Die Kappe kann dann für die Mulitpositionierung ausgebildet sein und ausschliesslich identische Vorsprünge haben. In diesem Fall sind die Seitenflächen des in die zweite Positionierungsnut hineinragenden Positionierungsvorsprungs durch breite Zwischenräume von der Nut-Fläche getrennt. Wenn die Kappe hingegen für die Einzelpositionierung ausgebildet ist und mehrere erste, in die ersten Nuten hineinpassende Vorsprünge und einen nur in die zweite Positionierungsnut hineinragenden zweiten Positionierungsvorsprung aufweist, kann dieser ebenfalls mit sehr kleinem seitlichen Spiel in die zweite Positionierungsnut eingreifen.

Der Innenraum 2054 der Kappe hat oberhalb der konischen Innenfläche 2061 von unten nach oben der Reihe nach einen weiteren zylindrischen Innenraumabschnitt 2071, eine mit der Achse 2003 einen Winkel bildende, sich nach oben verjüngende, konische Ringfläche 2072 und einen engeren zylindrischen Innenraumabschnitt, der als Führungsloch 2073 dient und dessen oberes Ende die obere Mündungsöffnung des Innenraums 2054 bildet. Die Kappe 2051 besteht beispielsweise aus einem metallischen Material, könnte aber stattdessen aus Kunststoff bestehen.

Die Vorrichtung 2001 weist Haltemittel 2080 mit einem einstückigen, im allgemeinen zur Achse 2003 rotationssymmetrischen Befestigungselement 2081 zum lösbaren Befestigen der des Abformelements bzw. der Abformkappe 2051 am Implantat 2002 auf. Das Befestigungselement 2081 besteht aus thermoplastischem Kunststoff und hat einen beispielsweise kreisförmigen Kopf 2082 sowie einen mit diesem zusammenhängenden, aus einer Hülse 2083 bestehenden Schaft. Die Hülse 2083 hat in der Nähe ihres mit dem Kopf 2082 zusammenhängenden Endes einen zylindrischen, relativ dickwandigen, steifen Führungsabschnitt 2084, der das Führungsloch 2073 der Kappe 2051 durchdringt und mit kleinem radialem Spiel axial verschiebbar im Führungsloch 2073 geführt ist. Beim oberen, sich ausserhalb der Kappe befindenden Ende des Führungsabschnitts 2084 ist aussen eine als Anschlag 2085 dienende Verdickung vorhanden. Bei dem sich im Innenraum 2054 befindenden Ende des Führungsabschnitts 2084 ist aussen eine ringförmige, im Axialschnitt widerhakenförmige Verdickung vorhanden, die einen Schnappabschnitt 2086 bildet. Dieser ist derart ausgebildet, dass er unter einer elastischen Deformation der Hülse 2083 von der Aussenseite der Kappe her durch das Führungsloch 2073 hindurch gedrückt werden kann und dann bei der Ringfläche 2072 einschnappt und diese hintergreift, so dass das Befestigungselement 2081 beweglich, aber unverlierbar von der Kappe gehalten wird. Das Befestigungselement kann in von der Kappe 51 gehaltenem Zustand in axialer Richtung in einem durch den Anschlag 2085 und dem Schnappabschnitt 2086 begrenzten Bereich hin und her verschoben werden. An den Schnappabschnitt 2086 schliesst der Mittelabschnitt 2087 der Hülse 2083 an. Der Mittelabschnitt 2087 ist wesentlich dünnwandiger als der Führungsabschnitt 2084 und hat eine Länge, die ein Mehrfaches seines Aussendurchmessers beträgt. Der Mittelabschnitt 2087 ist daher gut elastisch biegbar. Der dem Kopf 2082 abgewandte Endabschnitt der Hülse 2083 dient als Halteabschnitt 2088, bildet im Querschnitt einen in sich geschlossenen Ring und hat eine im Axialschnitt leicht konvex gebogene Aussenfläche, deren maximaler Aussendurchmesser etwas grösser ist als der Aussendurchmesser des Mittelabschnitts 2087. Das dem Kopf 2082 abgewandte, vom Halteabschnitt 2088 gebildete, freie Ende der Hülse 2083 ist offen.

Wenn das Abformelement bzw. die Abformkappe 2051 mit dem Support bzw. Implantat 2002 verbunden ist, ragt die Hülse 2083 derart in das Sackloch 2025 des Implantats hinein, dass sich mindestens ein Teil des Halteabschnitts 2088 innerhalb des Innengewindes 2027 befindet. Der Halteabschnitt 2088 ist unter einer elastischen Deformation in ungefähr radialer Richtung deformierbar, d.h. zusammendrückbar. Der maximale Aussendurchmesser des Halteabschnitts 2088 ist im entspannten, undeformierten Zustand ein wenig grösser als der Kerndurchmesser des Innengewindes 2027. Das Innengewinde 2027 des Supports bildet daher einen Halteabschnitt und/oder Verbindungsabschnitt 2031, an dem und/oder in dem der Halteabschnitt 2088 des Befestigungselements lösbar festgeklemmt wird.

Der Kopf 2081 ist auf seiner der Kappe zugewandten Seite mit elastisch deformierbaren Druckmitteln 2091 versehen, die an der Haltefläche 2059 der Kappe angreifen und - wie noch näher beschrieben wird - mindestens bei zusammengebauter Vorrichtung 2001 eine Druckkraft auf die Kappe ausüben. Die Druckmittel 2091 bestehen aus einer mit dem Kopf 2081 zusammenhängenden, ringförmigen, vom Kopf weg nach aussen geneigten, elastisch deformierbaren Lippe. Diese könnte jedoch durch Einschnitte unterteilt und durch einen Kranz vom separaten, um die Achse herum verteilten Lippen ersetzt werden.

Nun wird die Verwendung von einem Support bzw. Implantat 2002 und der Abformkappe 2051 beschrieben. Ein Zahnarzt erstellt im Knochen des Unter- oder Oberkiefers eines Patienten ein Loch und setzt das den Support 2003 bildende Implantat 2003 so in das Loch ein, dass die Verankerungspartie 2005 des Implantats im Knochen verankert wird, während die Schulter 2011 und der Kopf 2007 ähnlich wie in Fig. 9 aus dem Knochen herausragen. Wenn das Implantat nach einer gewissen Zeitdauer im Knochen eingeheilt ist, steckt der Zahnarzt die mit dem Befestigungselement 2081 versehene Abformkappe 2051 über den Kopf 2007 des Implantats gegen dessen Schulter 2011 und positioniert die Kappe dabei in der gewünschten Drehstellung. Beim Aufstecken der Kappe schiebt der Zahnarzt gleichzeitig den Halteabschnitt 2088 des Befestigungselement 2081 in das Sackloch 2025 des Implantats hinein. Der Halteabschnitt 2088 gelangt dabei in das Innengewinde 2027 und wird beim Hineinschieben unter einer elastischen Deformation in ungefähr radialer Richtung zusammengedrückt. Wenn die Kappe mit ihrer konischen Auflagefläche 2056 auf der konischen Schulterfläche 2012 des Implantats aufliegt, kann der Zahnarzt mit einem Finger oder irgend einem Instrument auf den Kopf 2082 des Befestigungselements 2081 drücken, auf dieses eine in Fig. 2 durch einen Pfeil angedeutete Kraft ausüben und den Kopf 2082 gegen die Kappe drücken, bis der Anschlag 2085 an der Kappe ansteht. Der Halteabschnitt 2088 wird dabei noch ein wenig tiefer in das Sackloch 2025 hineingeschoben und ist dann im Innengewinde 2027 bzw. dem von diesem gebildeten Halteabschnitt festgeklemmt. Die die elastischen Druckmittel 2091 bildende Lippe übt dann eine axiale Kraft auf die Kappe aus. Diese Kraft drückt die Kappe gegen die Schulterfläche 2022 des Implantats, so dass die Kappe spaltfrei auf der Schulterfläche aufliegt.

Der Zahnarzt kann nun einen Abformlöffel, der mit eventuell erwärmtem, weichem, plastisch verformbarem Abformmaterial gefüllt ist, analog wie in Fig. 10 über die Abformkappe gegen die den Knochen bedeckende Gingiva drücken. Diese sowie die aus dieser herausragenden Teile der Vorrichtung 2001 und eventuell in der Nähe der Vorrichtung noch vorhandene, natürliche Zähne erzeugen dann einen Abdruck im Abformmaterial und werden von diesem abgeformt, so dass das Abformmaterial eine Abdruckfläche bildet. Nach dem Abbinden und Verfestigen des Abformmaterials hebt der Zahnarzt den Abformlöffel und die in das Abformmaterial eingebettete Abformkappe ungefähr parallel zur Achse 2003 des Implantats von diesem ab. Dabei wird der Halteabschnitt 2088 unter Überwindung der in haltenden Klemm-, Haft- und Reibungskraft aus dem Innengewinde 2027 und dem ganzen Sackloch 2025 herausgezogen. Der Löffel, das in diesem enthaltene Abformmaterial und die in dieses eingebettete Abformkappe 2051 mit dem von dieser gehaltenen Befestigungselement 2081 werden nun aus dem Mund des Patienten herausgenommen und beispielsweise in ein zahntechnisches Labor gebracht.

Dort wird das Abformelement bzw. die Abformkappe lösbar mit einem Manipuliersupport bzw. Manipulierimplantat verbunden. Dieser bzw. dieses hat eine Verankerungspartie, einen Kopf, eine Schulter und ein in den Kopf mündendes, axiales Sackloch mit einem Innengewinde. Der obere, an die Schulter angrenzende Teil der Verankerungspartie, die Schulter, der Kopf und das Sackloch des Manipulierimplantats sind gleich ausgebildet wie beim Implantat 2002. Die Abformkappe 2051 wird beim Verbinden mit dem Manipulierimplantat analog positioniert und mittels des Befestigungselements 2081 lösbar am Manipulierimplantat befestigt wie bei der Verbindung mit dem Implantat 2002. Das Manipulierimplantat bildet nun zusammen mit der Abformkappe eine Vorrichtung. Die Abformkappe liegt dann mit der konischen Auflagefläche 2056 auf der ringförmigen, konischen Schulterfläche des Manipuliersupports bzw. Manipulierimplantats auf. Danach wird wie in Fig. 13 ein aus einem Modellmaterial bestehendes Meistermodell gebildet, in welchem der aus dem Abformmaterial herausragende Abschnitt des Manipuliersupports bzw. -implantats und insbesondere dessen Verankerungspartie verankert ist. Wenn ein Zahntechniker oder eine sonstige Person den Löffel mit dem Abformmaterial und der Abformkappe 2051 vom Meistermodell wegzieht, wird der Halteabschnitt 2088 der Abformkappe aus dem Manipulierimplantat herausgezogen. Dann wird eine Kappe lösbar am Manipuliersupport bzw. Manipulierimplantat befestigt und ein Aufbauelement aufgebaut. Wenn das Aufbauelement die gewünschte Form hat, wird es vom Manipulierimplantat entfernt, in den Mund des Patienten eingebracht und beispielsweise mit einer in das Innengewinde 2027 des Supports bzw. Implantats 2002 eingeschraubten an diesem befestigt. Das Aufbauelement liegt darin spaltfrei auf der Schulter 2011 des Supports bzw. Implantats 2002 auf.

Wenn ein Zahnarzt zwei zum Halten einer Brücke oder einer mehrerer Zähne aufweisenden Prothese bestimmte Implantate in einen Kiefer eines Patienten eingesetzt hat, kann der Zahnarzt an jedem dieser Implantate eine Abformkappe lösbar befestigen. Der Zahnarzt kann ein und denselben, mit Abformmaterial gefüllten Abformlöffel über die Abformkappen drücken, so dass die letzeren im Abformmaterial eingebettet werden. Nach der Verfestigung des Abformmaterials kann der Zahnarzt den Löffel und die zwei nun im Abformmaterial gehaltenen Abformkappen analog wie in Fig. 15 von den zwei Implantaten wegnehmen. Das ist auch dann möglich, wenn die Achse der beiden Implantate schief zueinander sind. Die Hülsen 2083 der Befestigungselemente werden beim Wegziehen der Abformkappen von den Implantaten dann beispielsweise vorübergehend ein wenig elastisch gebogen. Ein Zahntechniker kann dann unter Verwendung der zwei Abformkappen ein Meistermodell mit zwei Manipulierimplantaten herstellen und auf diesen ein aus einer Brücke oder Prothese bestehendes Aufbauelement aufbauen.

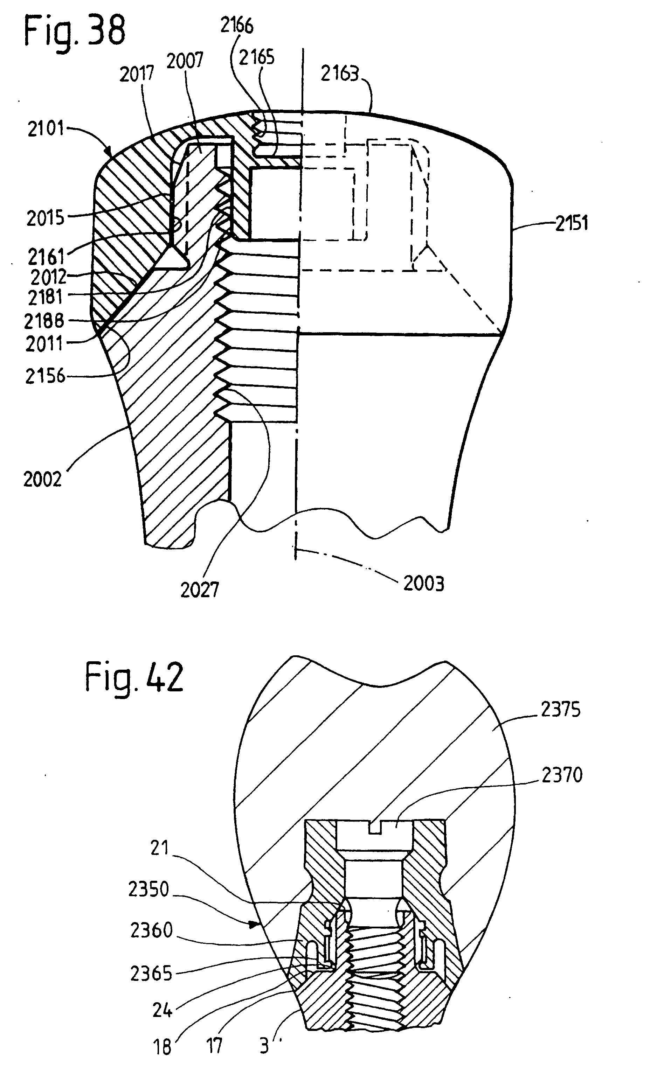

Die in Fig. 38 ersichtliche Vorrichtung 2101 besitzt einen Support bzw. ein Implantat. Dieser Support bzw. dieses Implantat ist gleich ausgebildet wie bei der in den Figuren 34 bis 37 gezeichneten Vorrichtung und wie in diesen Figuren mit 2002 bezeichnet. Die Vorrichtung 101 besitzt ferner ein Einheilelement bzw. eine Einheilkappe 2151. Diese hat eine spaltfrei auf der konischen Schulterfläche 2012 des Implantats aufliegende, konische Auflagefläche 2156 und eine zylindrische Innenfläche 2161, die mit sehr kleinem, radialem Spiel vom achsparallelen, im allgemeinen zylindrischen Kopfabschnitt 2015 des Implantats geführt und gestützt ist. Die Einheilkappe hat keine Positionierungsvorsprünge und ist also für die Freipositionierung ausgebildet. Die Einheilkappe 2151 hat einen das freie Ende des Kopfs 2007 in kleinem Abstand übergreifenden und abdeckenden Deckabschnitt 2163. Dieser ist im Zentrum mit einem kurzen axialen Sackloch 2165 versehen, das ein Innengewinde 2166 aufweist.

Das zum Befestigen der Einheilkappe 2151 am Implantat 2002 dienende Befestigungselement 2081 ist durch eine hohlzyindrische Hülse gebildet, die zusammen mit der Einheilkappe aus einem einstückigen Körper aus thermoplastischem Kunststoff besteht. Der in das Innengewinde 2027 des Sacklochs 2025 des Implantats 2 hineinragende Abschnitt der am freien Ende offenen Hülse dient als Halteabschnitt 2188 und ist im Innengewinde 2027 festgeklemmt. Zum Entfernen der Einheilkappe von dem in einen Mund eines Patienten eingesetzten Implantat kann der Zahnarzt beispielsweise ein Hilfsinstrument mit einem Aussengewinde in das Innengewinde 2166 der Einheilkappe einschrauben und die Kappe zusammen mit dem Befestigungselement vom Implantat wegziehen. Der Zahnarzt kann die Einheilkappe stattdessen jedoch auch mit den Fingern oder einer Zange fassen und wegziehen.

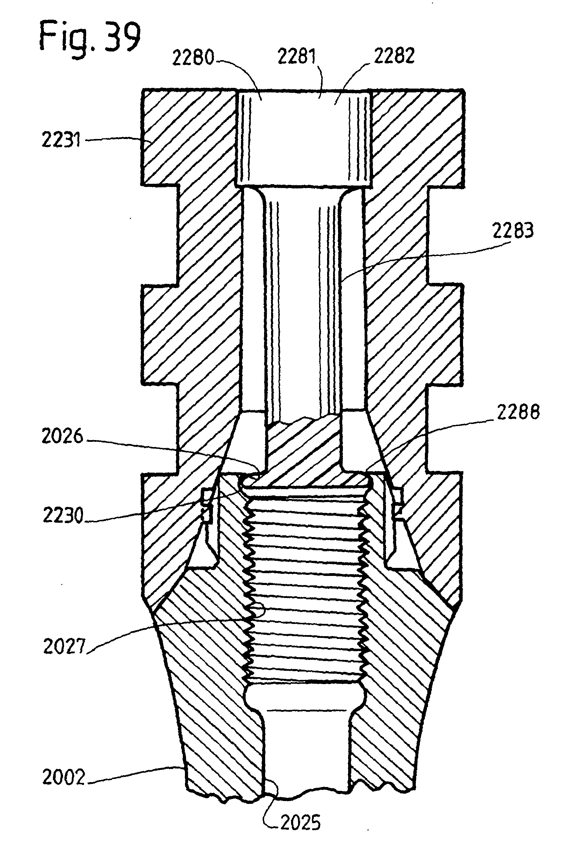

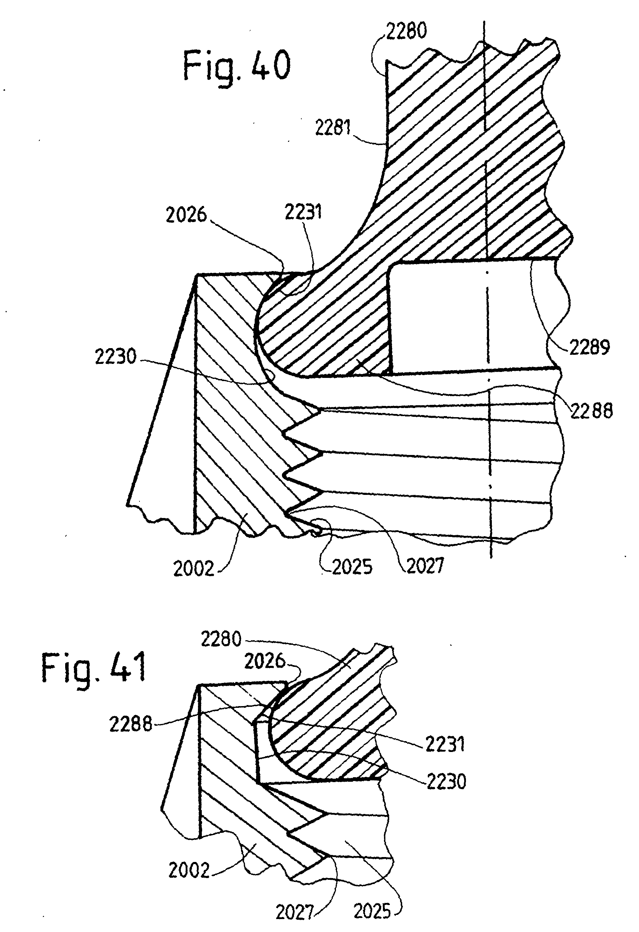

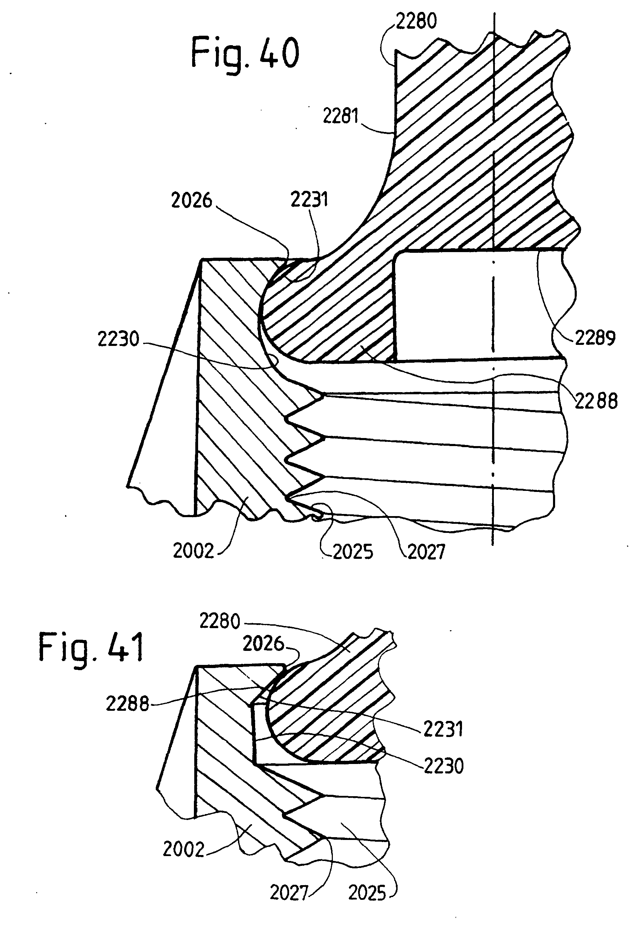

Die in Fig. 39 ersichtliche Vorrichtung besitzt einen Support, der zum Beispiel bei ähnlich wie der in den Figuren 34 bis 37 gezeichnete Support ausgebildet und wie dieser mit 2002 bezeichnet ist. Das den Support bildende, in Fig. 39 ersichtlich Implantat besitzt wiederum ein axiales Sackloch 2025 mit einer Mündung 2026 und einem Innengewinde 2027. Zwischen diesem und dem Mündungsrand ist jedoch eine auch in Fig. 40 ersichtliche Ringnut 2230 vorhanden. Die Ringnut 2230 ist im Axialschnitt konkav gebogen und bildet und/oder begrenzt einen Halteabschnitt und/oder Verbindungsabschnitt 2231.

Das in Fig. 39 gezeichnete Abformelement 2251 besitzt ein axiales, durchgehendes, abgestuftes Loch. In Fig. 39 sind ferner Haltemittel 2280 ersichtlich, die aus einem einstückigen, länglichen ursprünglich separaten Befestigungselement 2281 aus Kunststoff bestehen. Dieses hat am oberen Ende einen Kopf 2282 der fest und unbeweglich in einer zylindrischen Erweiterung des Lochs des Abformelements 2251 sitzt und beispielsweise in dieses eingepresst und/oder eingeklebt ist. Das Befestigungselement 2281 hat einen vom Kopf weg nach unten ragenden, elastisch biegbaren, länglichen Abschnitt bzw. Schaft 2283. Zwischen dessen Umfangsfläche und der Innenfläche des Abformelements ist ein ringförmiger Zwischenraum vorhanden, so dass der Schaft im Innenraum des Abformelements etwas gebogen werden kann. Am unteren Ende des Schaft ist ein scheibenförmiger Halteabschnitt 2288 mit einem im Axialschnitt konvex gebogenen Rand vorhanden. Der Randbereich des scheibenförmigen Halteabschnitts 2288 bildet in bezug auf den Schaft eine radial nach aussen ragende Nase. Der Halteabschnitt 2288 ist elastisch deformierbar und insbesondere in radialer Richtung ein wenig elastisch zusammendrückbar.

Zum Verbinden des Abformelements 2251 mit dem Support 2002 wird das Abformelement zusammen mit dem unverschiebbar mit ihm verbundenen Befestigungselement 2281 auf den Support gesteckt. Der Halteabschnitt des 2288 kann dabei unter einer vorübergehenden elastischen Deformation - nämlich einer radialen Kompression - in die Ringnut 2230 eingerastet werden. Der Halteabschnitt 2288 des Befestigungselements 2281 liegt dann an dem eine Hinterschneidung bildenden Halteabschnitt 2231 des Supports 2002 an und drückt die Auflagefläche des Abformelements 2251 gegen die Schulterfläche des Supports 2002. Zum Entfernen des Abformelements 2251 vom Support 2002 kann das Abformelement zusammen mit dem in diesem befestigten Befestigungselement vom Support wegziehen und die Halteabschnitte 2230, 2288 auseinander ausrasten. Der Support 2002 bzw. das Implantat besteht zwar aus einem festen metallischen Material. Der Halteabschnitt 2231 des Supports bildet jedoch beim Rand der Mündung 2026 eine ziemlich schmale Lippe und kann daher beim Einrasten und Ausrasten des Befestigungselements 2281 eventuell auch ein wenig elastisch deformiert werden.

Die zum Teil in Fig. 40 gezeichneten Haltemittel 2280 haben ein Befestigungselement 2281, das ähnlich wie dasjenige in Fig. 39 ausgebildet ist, jedoch auf der Stirnseite des scheibenförmigen Halteabschnitts 2288 noch eine Ausnehmung 2289 besitzt. Diese erhöht die elastische Deformierbarkeit des Halteabschnitts 2288, so dass dieser leichter in die Ringnut 2230 des Supports 2002 eingerastet und wieder aus dieser ausgerastet werden kann.

Die zum Teil in Fig. 41 gezeichnete Vorrichtung ist ähnlich wie die Vorrichtungen gemäss den Figuren 39, 40 ausgebildet. Die Ringnut 2230 des in Fig. 41 gezeichneten Supports 2002 ist jedoch im Axialschnitt nicht bogenförmig, sondern trapezförmig. Der Halteabschnitt 2231 des Supports hat daher eine vom Grund der Ringnut 2230 zur Mündung 2026 hin geneigte Fläche, an der der Halteabschnitt 2288 der Haltemittel 2280 bei zusammengesetzter Vorrichtung angreift.

Die in Fig. 42 gezeichnete Vorrichtung besitzt einen Support, der beispielsweise ähnlich wie der in den Figuren 1 bis 4 gezeichnete Support ausgebildet und wie dieser mit 3 bezeichnet ist. Ein Aufbauelement 2350 besitzt eine metallische Kappe 2360, die mit einer ringförmigen, konischen Auflagefläche auf der konischen Schulterfläche 18 des Supports aufliegt. Die Kappe hat Haltemittel 2365, nämlich Rastmittel 2365, die zum Beispiel ähnlich ausgebildet sind wie Halte- bzw. Rastmittel 65 des Abformelements 50. Die Halte- bzw. Rastmittel 2365 sind in die Ringnut 24 des Supports eingerastet und verbinden die Kappe 2360 lösbar mit dem Support. Die Kappe kann eventuell zusätzlich noch mit einer Okklusalschraube 2370 am Support befestigt und zum Beispiel für die Multi- oder Einzelpositionierung ausgebildet sein. Auf die Kappe ist eine Suprakonstruktion 2375 aufgebaut.

Die anhand der Figuren 5 bis 42 beschriebenen Varianten der Supporte und Abformelemente können - soweit jeweils nichts anderes geschrieben wurde - ähnlich ausgebildet sein wie die anhand der Figuren 1 bis 4 und/oder anhand von andern vorangehenden Figuren beschriebenen Supporte und Abformelemente. Im übrigen können Merkmale von verschiedenen gezeichneten Varianten miteinander kombiniert werden.

Die Vorrichtungen können noch auf verschiedene Arten geändert werden. Bei dem in den Figuren 1 bis 4 ersichtlichen Support 3 kann man die Positionierungsvorsprünge 25 des Supports 3 und die diese von der Schulter des Supports abgrenzende Ringnut 24 derart ausbilden, dass die zum Anklipsen des Abformelements dienende Hinterschneidung durch die Positionierungsausnehmungen des Supports vollständig in mehrere entlang dem Umfang des Supports verteilte Teile getrennt wird, die dann eventuell als mehrere Hinterscheidungen angesehen werden können.

Die in das Loch eines Supports hineinragenden, in den Figuren 34, 35, 38, 39, 40 41 ersichtlichen Halteabschnitte der Haltemittel eines mit dem Support verbundenen Elements können beispielsweise noch durch axiale Einschnitte in federnde Zungen oder dergleichen unterteilt werden. Die am Innengewinde eines Supports angreifenden Halteabschnitte können eventuell mit kleinen, widerhakenförmigen Rastvorsprüngen bzw. Nasen versehen werden. Diese können beim Verbinden mit dem Implantat mehr oder weniger in die schraubenlinienförmige Rille des Innengewindes einrasten.

Die aus einem einstückigen Implantat bestehenden Supporte können durch ein Implantat und einen separaten, den Kopf des Supports bildenden, lösbar in ein Innengewinde eines Sacklochs des Implantats geschraubten Sekundärteil ersetzt werden. Der letztere kann dann seinerseits ein Sackloch mit einem Innengewinde aufweisen.

### STÜCKLISTE

**Figuren 1 - 4**
   - 1: Vorrichtung
   - 3: Support (einstückiges Implantat)
   - 5: Achse
   - 11: zylindrischer Abschnitt
   - 12: Aussengewinde
   - 13: trompetenförmiger Abschnitt
   - 14: Mantel- und/oder Aussenfläche
   - 15: Verankerungspartie
   - 17: Schulter
   - 18: Schulterfläche
   - 21: Kopf

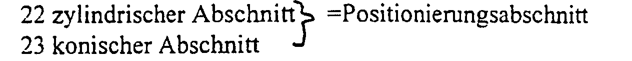

   - 24: Ringnut
   - 25: Positionierungsvorsprung
   - 27: erste Positionierungsausnehmung
   - 28: zweite Positionierungsausnehmung
   - 31: Hinterschneidung = Halteabschnitt und/oder Verbindungsabschnitt
   - 32: Haltefläche und/oder Verbindungsfläche
   - 33: Sackloch
   - 34: Innengewinde
   - 35: Hohlraum
   - 36: Loch
   - 50: Abformelement
   - 53: Wand
   - 54: Innenraum
   - 55: Auflageabschnitt
   - 56: Auflagefläche
   - 58: Mantel- und/oder Aussenfläche
   - 59: Ringnut
   - 60: axiale Nut
   - 65: Rastmittel (= Verbindungsmittel und/oder Haltemittel)
   - 66: federnder, hülsenförmiger Abschnitt
   - 67: Nase
   - 69: ringförmiger Zwischenraum
   - 71: Blickrichtung
   - 73: Innenfläche
**Figuren 5, 6**
   - 91: Vorrichtung
   - 100: Abformelement
   - 101: Hülse
   - 102: Verschlusselement
   - 103: Wand
   - 104: Innenraum
   - 105: Auflageabschnitt
   - 106: Auflagefläche
   - 115: Haltemittel und/oder Rastmittel
   - 121: Positionierungsvorsprünge
   + Nummern von den Figuren 1-4
**Figur 7**
   - 141: Vorrichtung
   - 150: Abformelement
   - 171: erster Positionierungsvorsprung
   - 172: zweiter Positionierungsvorsprung
   + Nummern von den Figuren 1-4
**Figur 8**
   - 200: Abformelement
   - 201: Kappe
   - 203: Wand
   - 205: Auflageabschnitt
   - 206: Auflagefläche
   - 214: Einsatz
   - 215: Haltemittel und/oder Rastmittel
   - 216: hülsenförmiger Abschnitt
   - 217: Nase
   - 219: Zwischenraum
   - 220: Einschnitt
   - 221: Zunge
**Figuren 9 - 14**
   - 250: Knochen
   - 251: Weichgewebe (Gingiva)
   - 253: Abformlöffel
   - 255: Abformmaterial
   - 257: Abdruckfläche
   - 263: Manipuliersupport
   - 265: Verankerungspartie
   - 266: Verdickung
   - 267: Schulter
   - 271: Kopf
   - 275: Vorrichtung
   - 281: Meistermodell
   - 285: Aufbauelement
   + Nummern der Figuren 1 - 6
**Figuren 15, 16**
   - 300: Knochen
   - 301: Weichgewebe
   - 303: Abformlöffel
   - 305: Abformmaterial
   - 307: Pfeil
   + Nummern der Figuren 1 - 4
**Figuren 17, 18, 19**
   - 401: Vorrichtung
   - 403: Support
   - 405: Achse
   - 417: Schulter
   - 418: Schulterfläche
   - 421: Kopf
   - 422: zylindrischer Abschnitt
   - 423: konischer Abschnitt
   - 424: Ringnut
   - 425: Positionierungsvorsprung
   - 427: erste Postionierungsausnehmung
   - 431: Hinterschneidung = Halteabschnitt und/oder Verbndungsabschnitt
   - 450: Abformelement
   - 451: Hülse
   - 452: Verschlusselement
   - 453: Wand
   - 455: Auflageabschnitt
   - 456: Auflagefläche
   - 465: Haltemittel und/oder Rastmittel
   - 471: Positionierungsvorsprung
**Figur 20**
   - 500: Abformelement
   - 501: Kappe
   - 503: Wand
   - 505: Auflageabschnitt
   - 506: Auflagefläche
   - 514: Einsatz
   - 515: Halte- bzw. Rastmittel
   - 521: Zunge
   - 522: Positionierungsvorsprung
**Figur 21**
   - 553: Abformlöffel
   - 555: Abformmaterial
   - 563: Manipuliersupport
**Figur 22**
   - 591: Vorrichtung
   - 600: Abformelement
   - 605: Auflageabschnitt
   - 606: Auflagefläche
   - 615: Halte- bzw. Rastmittel
   - 618: Innenflächenabschnitt
   + Nummern von den Figuren 1 - 4
**Figur 23**
   - 701: Vorrichtung
   - 703: Support
   - 707: Implantat
   - 708: Sekundärteil
   - 715: Verankerungspartie
   - 717: Schulter
   - 718: Schulterfläche
   - 719: Sackloch
   - 720: Innengewinde
   - 721: Kopf
   - 722: Innen- und/oder Verbindungsabschnitt
   - 724: Ringnut
   - 731: Hinterschneidung = Halte- und/oder Verbindungsabschnitt
   - 733: Sackloch
   - 734: Innengewinde
   - 750: Abformelement
   - 765: Halte- bzw.Rastmittel
**Figuren 24, 25**
   - 801: Vorrichtung
   - 803: Support
   - 805: Achse
   - 808: Sekundärteil
   - 821: Kopf
   - 822: Innen- und/oder Verbindungsabschnitt
   - 823: Achse
   - 824: Ringnut
   - 827: Positionierungsausnehmung
   - 828: Loch
   - 829: Einschnitt
   - 830: Zunge
   - 835: Schraube
   - 850: Abformelement
   - 853: Wand
   - 856: Auflagefläche
   - 865: Halte- bzw. Rastmittel
   - 871: Positionierungsvorsprung
   - 881: Fläche
   + Nummern von Fig. 23
**Figur 26**
   - 901: Vorrichtung
   - 903: Support
   - 908: Sekundärteil
   - 928: Loch
   - 935: Schraube
   + Nummern der Figuren 23 - 25
**Figur 27**
   - 1001: Vorrichtung
   - 1003: Support
   - 1005: Achse
   - 1007: Implantat
   - 1008: Sekundärteil
   - 1017: Schulter
   - 1018: Schulterfläche
   - 1019: Sackloch
   - 1021: Kopf
   - 1022: Innen- und/oder Verbindungsabschnitt
   - 1023: Achse
   - 1028: Loch
   - 1029: Innengewinde
   - 1035: Schraube
   - 1050: Abformelement
   - 1056: Auflagefläche
   - 1057: Fortsatz
**Figuren 28, 29**
   - 1103: Support
   - 1117: Schulter
   - 1118: Schulterfläche
   - 1121: Kopf
   - 1122: zylindrischer Abschnitt
   - 1123: konischer Abschnitt
   - 1124: Ringnut
   - 1125: Positionierungsvorsprung
   - 1127: erste Positionierungsausnehmung
   - 1128: zweite Positionierungsausnehmung
   - 1150: Abformelement
   - 1153: Wand
   - 1155: Auflageabschnitt
   - 1156: Auflagefläche
   - 1165: Halte- und/oder Rastmittel
   - 1171: Positonierungsvorsprung
**Figuren 30 - 32**
   - 1203: Support
   - 1221: Kopf
   - 1225: Positionierungsvorsprung
   - 1227: erste Positionierungsausnehmung
   - 1228: zweite Positionierungsausnehmung
   - 1250: Abformelement
   - 1251: Kappe
   - 1260: Positionierungseinsatz
   - 1271: Positionierungsvorsprung
**Figur 33**
   - 1303: Support ( = Implantat)
   - 1313: trompetenförmiger Abschnitt
   - 1316: Vertiefung ( = ringförmige Rille)
   - 1317: Schulter
   - 1318: Schulterfläche
   - 1321: Kopf
   - 1322: zylindrischer Abschnitt
   - 1323: konischer Abschnitt
   - 1327: erste Positionierungsausnehmung
   - 1350: Abformelement
   - 1365: Haltemittel
   - 1367: Nase
**Figuren 34 - 37**
   - 2001: Vorrichtung
   - 2002: Support = Implantat
   - 2003: Achse
   - 2005: Verankerungspartie
   - 2007: Kopf
   - 2009: sich erweiternder, trompetenförmiger Abschnitt
   - 2011: Schulter
   - 2012: konische Schulterfläche
   - 2013: ebene Ringfläche
   - 2015: achsparalleler Kopfabschnitt
   - 2017: im allgemeinen konischer Kopfabschnitt
   - 2019: Ringnut
   - 2023: Positionierungsausnehmung bzw. -nut
   - 2025: Sackloch
   - 2026: Mündung
   - 2027: Innengewinde
   - 2028: Rille
   - 2029: zylindrischer Lochabschnitt
   - 2031: Halteabschnitt und/oder Verbindungsabschnitt
   - 2051: Abformelement bzw. Abformkappe
   - 2053: Wand
   - 2054: Innenraum
   - 2055: Auflageabschnitt
   - 2056: konische Auflagefläche
   - 2058: Mantel- und/oder Aussenfläche
   - 2059: Haltefläche
   - 2061: konische Innenfläche
   - 2062: Positionierungsabschnitt
   - 2063: Ringnut
   - 2065: Positionierungsvorsprung
   - 2066: Scheitelflächen
   - 2067: Anschrägung
   - 2068: Seitenfläche
   - 2069: Zwischenraum
   - 2071: zylindrischer Innenraumabschnitt
   - 2072: Ringfläche
   - 2073: Führungsloch
   - 2080: Haltemittel
   - 2081: Befestigungselement
   - 2082: Kopf
   - 2083: Hülse (Schaft)
   - 2084: Führungsabschnitt
   - 2085: Anschlag
   - 2086: Schnappabschnitt
   - 2087: Mittelabschnitt
   - 2088: Halteabschnitt
   - 2091: elastische Druckmittel (= Lippe)
   - 2095: Kraft
**Figur 38**
   - 2101: Vorrichtung
   - 2151: Einheilelement bzw. Einheilkappe
   - 2156: Auflagefläche
   - 2161: Innenfläche
   - 2163: Deckabschnitt
   - 2165: Sackloch
   - 2166: Innengewinde
   - 2181: Befestigungselement
   - 2188: Halteabschnitt
**Figur 39**
   - 2230: Ringnut
   - 2231: Halte- und/oder Verbindungsabschnitt ( = Hinterschneidung)
   - 2251: Abformelement
   - 2280: Haltemittel
   - 2281: Befestigungselement
   - 2282: Kopf
   - 2283: Abschnitt bzw. Schaft
   - 2288: Halteabschnitt
   + Nummern der Figuren 34 - 37
**Figur 40**
   - 2289: Ausnehmung
   + Nummern von Fig. 39
**Figur 41**
   wie Figur 40
**Figur 42**
   - 2350: Aufbauelement
   - 2360: Kappe
   - 2365: Haltemittel = Rastmittel
   - 2370: Okklusalschraube
   - 2375: Suprakonstruktion
   + Nummern der Figuren 1 - 4

## Patentansprüche

1. Vorrichtung zur Bildung eines Zahnersatzes, mit einem Support (3, 263, 403, 563, 703, 803, 903, 1003, 1103) und einem durch Haltemittel (65, 115, 215, 465, 515, 615, 865, 1165, 1365) lösbar mit diesem verbindbaren Element (50, 100, 150, 200, 450, 500, 600, 750, 850, 1050, 1150, 1350), wobei der Support (3, 263, 403, 563, 703, 803, 903, 1003, 1103) und/oder die Haltemittel (65, 115, 215, 465, 515, 615, 865, 1165, 1365) zumindest stellenweise elastisch deformierbar sind, wobei ferner der Support (3, 263, 403, 563, 703, 803, 903, 1003, 1103) eine zum Verankern in einem Knochen (250, 300) und/oder Meistermodell (281) bestimmte Verankerungspartie (15, 265, 715), einen zum Herausragen aus dem Knochen (250, 300) bzw. Meistermodell (281) bestimmten Kopf (21, 271, 421, 721, 821, 1021, 1121, 1121, 1321) und eine zwischen diesem und der Verankerungspartie (15, 265, 715) vorhandene Schulter (17, 267, 417, 717, 1017, 1117, 1317) aufweist und wobei das Element (50, 100, 150, 200, 450, 500, 600, 750, 850, 1050, 1150, 1350) bei zusammengesetzter Vorrichtung mit einer Auflagefläche (56) eines Auflageabschnitts (55) auf der Schulter (17, 267, 417, 717, 1017, 1117, 1317) aufliegt und den Kopf (21, 271, 421, 721, 821, 1021, 1121, 1121, 1321) im Querschnitt umschließt,
**dadurch gekennzeichnet, daß** der Support (3, 263, 403, 563, 703, 803, 903, 1003, 1103) auf der der Verankerungspartie (15, 265, 715) abgewandten Seite der Schulter (17, 267, 417, 717, 1017, 1117, 1317) an seiner Außenfläche eine Hinterschneidung (31, 431, 731) aufweist, in welche die Haltemittel (65, 115, 215, 465, 515, 615, 865, 1165, 1365) von außen her eingreifen, und daß die Haltemittel (65, 115, 215, 465, 515, 615, 865, 1165, 1365) okklusal der Auflagefläche (56) angeordnet sind und von einem Zwischenraum (69) umgeben sind, welcher außen von dem Auflageabschnitt (55) begrenzt ist.

2. Vorrichtung zur Bildung eines Zahnersatzes, mit einem Support (2002) und einem durch Haltemittel (2080, 2280, 2365) lösbar mit diesem verbindbaren Element (2051, 2251, 2350), wobei der Support (2002) und/oder die Haltemittel (2080, 2280, 2365) zumindest stellenweise elastisch deformierbar sind, wobei ferner der Support (2002) eine zum Verankern in einem Knochen und/oder Meistermodell bestimmte Verankerungspartie (2005), einem zum Herausragen aus dem Knochen bzw. Meistermodell bestimmten Kopf (2007) und eine zwischen diesem und der Verankerungspartie (2005) vorhandene Schulter (2011) aufweist, wobei das Element (2051, 2251, 2350) bei zusammengesetzter Vorrichtung mit einer Auflagefläche (2056) einer Außenwand (2053) auf der Schulter (2011) aufliegt und den Kopf (2007) im Querschnitt umschließt, und wobei die Haltemittel (2080, 2280, 2365) bei zusammengesetzter Vorrichtung mittels eines Halteabschnitts (2088) in einem axialen Loch (2025) des Supports (2002) mit diesem verklemmt und/oder verrastet ist,
**dadurch gekennzeichnet, daß** die Haltemittel (2080, 2280, 2365) eine Hülse (2083) mit einem elastisch biegbaren Mittelabschnitt (2087) enthalten, daß die die Hülse (2083) einerseits mit dem Element (2051, 2251, 2350) verbunden ist und andererseits den mit dem Loch (2025) des Supports (2002) verklemmten und/oder verrasteten Halteabschnitt (2088) aufweist, und daß der Mittelabschnitt (2087) von einem Zwischenraum (2054) umgeben ist, welcher außen von der Wand (2053) des Elements (2051, 2251, 2350) begrenzt ist.

3. Vorrichtung nach Anspruch 1 oder 2, **dadurch gekennzeichnet, daß** die Verankerungspartie (15, 2005) eine Achse (5, 2003) definiert, daß die Schulter (17, 2011) eine ringförmige Schulterfläche (18, 2012) besitzt, daß die Auflagefläche (56, 2056) ringförmig ist, daß die Schulterfläche (18, 2012) und die Auflagefläche (56, 2056) beide konisch oder beide eben sind, Außenränder haben und bei zusammengesetzter Vorrichtung aufeinander aufliegen und daß die Außenränder bei zusammengebauter Vorrichtung von deren Umgebung her entlang ihren ganzen Umfängen in zur Achse (5, 405, 805) der Verankerungspartie (15, 2005) ungefähr radialen Blickrichtungen (71) sichtbar sind.

4. Vorrichtung nach einem der Ansprüche 1 bis 3, **dadurch gekennzeichnet, daß** der Kopf (21, 821, 2007) eine Achse (5, 823, 2003) definiert und daß die Haltemittel (65, 2080) derart biegbar sind, daß das Element (5, 850, 2051) durch Verschieben in einer Richtung vom Support (3, 803, 2002) wegnehmbar und/oder mit diesem verbindbar ist, die mit der Achse (5, 823, 2003) des Kopfes (21, 821, 2007) einen Winkel bis mindestens ungefähr 15° bilden darf.

5. Vorrichtung nach einem der Ansprüche 2 bis 4, **dadurch gekennzeichnet, daß** die Schulter (2011) koaxial zu einer von der Verankerungspartie (2005) definierten Achse (2003) ist und daß der Kopf (2007) einen im wesentlichen zu dieser Achse (2003) parallelen Kopfabschnitt (2015) und einen sich von diesem weg zum freien Ende des Kopfes (2007) hin verjüngenden, im allgemeinen konischen Kopfabschnitt (2017) hat.

6. Vorrichtung nach Anspruch 5, **dadurch gekennzeichnet, daß** der konische Kopfabschnitt (2017) eine Konusfläche definiert, die mit der Achse (2003) der Verankerungspartie (15) einen kleineren Winkel bildet als die Schulterfläche (2012), daß die Auflagefläche (2056) spaltfrei auf der konischen Schulterfläche (2012) aufliegt und daß das Element (2051) eine konische Innenfläche (2061) hat, die mit kleinem Spiel vom im allgemeinen konischen Kopfabschnitt (2017) gestützt ist.

7. Vorrichtung nach einem der Ansprüche 1 bis 6, **dadurch gekennzeichnet, daß** der Kopf (21, 271, 421, 721, 821, 1021, 1121) mindestens eine Ausnehmung (27, 28, 427, 827, 1127, 1128) aufweist, die derart angeordnet ist, daß sie einen Vorsprung (121, 171, 172, 471, 521, 871, 1171) des Elements (100, 150, 450, 500, 850, 1150) aufnehmen und dieses dadurch gegen Drehungen sichern kann.

8. Vorrichtung nach einem der Ansprüche 1 bis 7, **dadurch gekennzeichnet, daß** der Support (3, 263, 403, 563, 703, 1003, 1103) eine Achse (5, 405, 1005) definiert, daß der Kopf (21, 271, 421, 721, 1021, 1121) um die Achse (5, 405, 1005) heraum verteilte Ausnehmungen (27, 28, 427, 1127, 1128) aufweist und daß diese mehrere erste Ausnehmungen (27, 427, 1127) mit identischen Formen sowie Abmessungen und eine zweite, breitere und/oder tiefere Ausnehmung (28, 1128) aufweisen.

9. Vorrichtung nach einem der Ansprüche 2 bis 8, **dadurch gekennzeichnet, daß** die Haltemittel (2080) bei zusammengesetzter Vorrichtung an einem Innengewinde (2027) im Loch (2025) des Supports (2002) angreifen.

10. Vorrichtung nach einem der Ansprüche 1 bis 9, **dadurch gekennzeichnet, daß** die Haltemittel (65, 2280) eine ringförmige Nase (67) oder entlang einem Kreis verteilte Nasen aufweisen und daß die bzw. jede Nase (67) bei zusammengesetzter Vorrichtung in ungefähr radialer Richtung nach innen oder außen zu einem Halteabschnitt (31, 2231) des Supports (3, 2002) hin vorsteht und an diesem Halteabschnitt (31, 2231) angreift.

11. Vorrichtung nach einem der Ansprüche 1 bis 10, **dadurch gekennzeichnet, daß** ein bei zusammengesetzter Vorrichtung auf der Schulter (17, 267, 417, 717, 1017, 1117) aufliegender Auflageabschnitt (55) des Elements (50, 100, 450, 600, 750, 850, 1050, 1150) und die Haltemittel (65, 115, 465, 515, 615, 765, 1165) zusammen aus einem einstückigen Körper oder aus ursprünglich separaten, starr miteinander verbundenen Körpern gebildet sind.

12. Vorrichtung nach einem der Ansprüche 2 bis 11, **dadurch gekennzeichnet, daß** die Verankerungspartie (2005) eine Achse (2003) definiert, daß das Element (2051) und die Haltemittel (2080) aus separaten, bezüglich einander entlang der Achse (2003) verschiebbaren Körpern bestehen, daß das Element (2051) eine dem Support (2002) abgewandte, mit der Achse (2003) einen Winkel bildende Haltefläche (2059) hat und daß die Haltemittel (2081) an der Haltefläche (2059) angreifen.

13. Vorrichtung nach Anspruch 12, **dadurch gekennzeichnet, daß** die Haltemittel (2081) mit elastisch deformierbaren Druckmitteln (2091) an der Haltefläche (2059) angreifen und daß die Druckmittel (2091) eine das Abformelement (2005) gegen die Schulter (2011) drückende Kraft erzeugen, wobei die Druckmittel (2091) vorzugsweise eine die Achse (2003) umschließende, ringförmige Lippe oder einen Kranz von um die Achse (2003) herum verteilter Lippen aufweisen und vorzugsweise zusammen mit dem Halteabschnitt (2088) aus einem einstückigen Körper aus Kunststoff bestehen.

14. Vorrichtung nach einem der Ansprüche 1 bis 13, **dadurch gekennzeichnet, daß** die Verankerungspartie (2005), die Schulter (2011) und der Kopf (2007) starr sowie unlösbar miteinander verbunden sind und beispielsweise einen einstückigen Körper aufweisen, der sich von einem freien Ende der Verankerungspartie (2005) bis zu einem freien Ende des Kopfes (2007) erstreckt.

15. Vorrichtung nach einem der Ansprüche 1 bis 14, **dadurch gekennzeichnet, daß** der Support (703) ein Implantat (707) und einen ursprünglich separaten Sekundärteil (708) aufweist, daß das Implantat (707) die Verankerungspartie (715) bildet und ein die Schulter (717) bildendes Ende sowie ein axiales Loch (719) besitzt, daß der Sekundärteil (708) im Loch (719) des Implantats (707) an diesem befestigt ist und einen aus dem Implantat (707) herausragenden, den Kopf (721) bildenden Abschnitt hat und daß die Haltemittel (765) bei zusammengesetzter Vorrichtung mit dem Sekundärteil (708) verklemmt und/oder verrastet sind.

16. Vorrichtung nach einem der Ansprüche 1 bis 15, **dadurch gekennzeichnet, daß** das lösbar am Support (3, 263, 403, 563, 703, 803, 903, 1003, 1103) befestigbare Element ein Abformelement (50, 100, 150, 200, 450, 500, 600, 750, 850, 1050, 1150) oder ein Einheilelement (2151) oder ein Aufbauelement (2050) und/oder eine Suprakonstruktion (2375) ist, wobei das Aufbauelement (2350) und/oder die Suprakontruktion (2375) beispielsweise zur Bildung einer Krone oder einer Brücke oder einer Prothese mit mehreren künstlichen Zähnen dient.

## Claims

1. A device for forming a dental prosthesis, comprising a support (3, 263, 403, 563, 703, 803, 903, 1003, 1103) and an element (50, 100, 150, 200, 450, 500, 600, 750, 850, 1050, 1150, 1350) which can be removably attached thereto by holding means (65, 115, 215, 465, 515, 615, 865, 1165, 1365), wherein the support (3, 263, 403, 563, 703, 803, 903, 1003, 1103) and/or the holding means (65, 115, 215, 465, 515, 615, 865, 1165, 1365) are elastically deformable at least in places, wherein in addition the support (3, 263, 403, 563, 703, 803, 903, 1003, 1103) comprises an anchoring part (15, 265, 715) intended for anchoring in a bone (250, 300) and/or master model (281), a head (21, 271, 421, 721, 821, 1021, 1121, 1121, 1321) intended for protruding from the bone (250, 300) or master model (281) and a shoulder (17, 267, 417, 717, 1017, 1117, 1317) which is present between the head and the anchoring part (15, 265, 715), and wherein when the device is assembled a support face (56) of a support section (55) of the element (50, 100, 150, 200, 450, 500, 600, 750, 850, 1050, 1150, 1350) rests on the shoulder (17, 267, 417, 717, 1017, 1117, 1317) and the element surrounds the head (21, 271, 421, 721, 821, 1021, 1121, 1121, 1321) in cross-section,
**characterised in that** on the side of the shoulder (17, 267, 417, 717, 1017, 1117, 1317) facing away from the anchoring part (15, 265, 715) the support (3, 263, 403, 563, 703, 803, 903, 1003, 1103) comprises an undercut (31, 431, 731) on its external face, into which undercut the holding means (65, 115, 215, 465, 515, 615, 865, 1165, 1365) fit from the outside, and that the holding means (65, 115, 215. 465, 515, 615, 865, 1165, 1365) are disposed occlusally in relation to the support face (56) and are surrounded by a gap (69) which is bounded externally by the support section (55).

2. A device for forming a dental prosthesis, comprising a support (2002) and an element (2051, 2251, 2350) which can be removably attached thereto by holding means (2080, 2280, 2365), wherein the support (2002) and/or the holding means (2080, 2280, 2365) are elastically deformable at least in places, wherein in addition the support (2002) comprises an anchoring part (2005) intended for anchoring in a bone and/or master model, a head (2007) intended for protruding from the bone or master model and a shoulder (2011) which is present between the head and the anchoring part (2005), wherein when the device is assembled a support face (2056) of a support section (205₃) of the element (2051, 2251, 2350) rests on the shoulder (2011) and the element surrounds the head (2007) in cross-section, and wherein when the device is assembled the holding means (2080, 2280, 2365) is clamped and/or locked to the support in an axial hole (2025) in the support (2002) by means of a holding section (2088),
**characterised in that** the holding means (2080, 2280, 2365) contain a bush (2083) comprising an elastically flexible middle section (2087), that the bush (2083) is attached on one side to the element (2051, 2251, 2350) and on the other side comprises the holding section (2088) which is clamped and/or locked to the hole (2025) in the support (2002), and that the middle section (2087) is surrounded by a gap (2054) which is bounded externally by the wall (2053) of the element (2051, 2251, 2350).

3. A device according to claim 1 or 2, **characterised in that** the anchoring part (15, 2005) defines an axis (5, 2003), that the shoulder (17, 2011) has an annular shoulder face (18, 2012), that the support face (56, 2056) is annular, that the shoulder face (18, 2012) and the support face (56, 2056) are both conical and are both plain, have external edges and rest on each other when the device is assembled, and that when the device is assembled the external edges are visible along their entire peripheries from their surroundings in directions of view (71) which are approximately radial to the axis (5, 405, 805) of the anchoring part (15, 2005).

4. A device according to any one of claims 1 to 3, **characterised in that** the head (21, 821, 2007) defines an axis (5, 823, 2003) and that the holding means (65, 2080) are flexible so that the element (5, 850, 2051) can be removed from and/or attached to the support (3, 803, 2002) in a direction which can form an angle of up to at least about 15° with the axis (5, 823, 2003) of the head (21, 821, 2007).

5. A device according to any one of claims 2 to 4, **characterised in that** the shoulder (2011) is coaxial with an axis (2003) defined by the anchoring part (2005), and that the head (2007) has a head section (2015) which is substantially parallel to said axis (2003) and a generally conical head section (2017) which tapers from head section (2015) towards the free end of the head (2007).

6. A device according to claim 5, **characterised in that** the conical head section (2017) defines a cone face which forms an angle with the axis (2003) of the anchoring part (15) which is smaller than that formed by the shoulder face (2012), that the support face (2056) rests without a gap on the conical shoulder face (2012), and that the element (2051) has a conical internal face (2061) which is supported with a slight clearance by the generally conical head section (2017).

7. A device according to any one of claims 1 to 6, **characterised in that** the head (21, 271, 421, 721, 821, 1021, 1121) comprises at least one recess (27, 28, 427, 827, 1127, 1128) which is disposed so that it can receive a projection (121, 171, 172, 471, 521, 871, 1171) on the element (100, 150, 450, 500, 850, 1150) and can thereby prevent the latter from rotating.

8. A device according to any one of claims 1 to 7, **characterised in that** the support (3, 263, 403, 563, 703, 1003, 1103) defines an axis (5, 405, 1005), that the head (21, 271,421, 721, 1021, 1121) comprises recesses (27, 28, 427, 1127, 1128) distributed about the axis (5, 405, 1005), and that said recesses comprise a plurality of first recesses (27, 427, 1127) of identical shapes and dimensions and a second, wider and/or deeper recess (28, 1128).

9. A device according to any one of claims 2 to 8, **characterised in that** when the device is assembled the holding means (2080) act on an internal screw thread (2027) in the hole (2025) in the support (2002).

10. A device according to any one of claims 1 to 9, **characterised in that** the holding means (65, 2280) comprise an annular projection (67) or projections distributed along a circle and that when the device is assembled the or each projection (67) protrudes approximately radially inwards or outwards towards a holding section (31, 2231) of the support (3, 2002) and acts on said holding section (31, 2231).

11. A device according to any one of claims 1 to 10, **characterised in that** the holding means (65, 115, 465, 515, 615, 765, 1165), and a support section (55) of the element (50, 100, 450, 600, 750, 850, 1050, 1150) which rests on the shoulder (17, 267, 417, 717, 1017, 1117) when the device is assembled, are formed together from a one-piece body or from bodies which were originally separate and which are rigidly attached to each other.

12. A device according to any one of claims 2 to 11, **characterised in that** the anchoring part (2005) defines an axis (2003), that the element (2051) and the holding means (2080) consist of separate bodies which can be displaced with respect to each other along said axis (2003), that the element (2051) has a holding face (2059) which faces away from the support (2002) and which forms an angle with the axis (2003), and that the holding means (2081) act on the holding face (2059).

13. A device according to claim 12, **characterised in that** the holding means (2081) act on the holding face (2059) with elastically deformable pressure means (2091) and that the pressure means (2091) generate a force which presses the moulding element (2005) against the shoulder (2011), wherein the pressure means (2091) preferably comprise an annular lip which surrounds the axis (2003) or a ring of lips distributed about the axis (2003), and together with the holding section (2088) preferably consist of a one-piece body made of synthetic material.

14. A device according to any one of claims 1 to 13, **characterised in that** the anchoring part (2005), the shoulder (2011) and the head (2007) are rigidly and irremovably attached to each other and comprise, for example, a one-piece body which extends from the free end of the anchoring part (2005) as far as a free end of the head (2007).

15. A device according to any one of claims 1 to 14, **characterised in that** the support (703) comprises an implant (707) and what was originally a separate secondary part (708), that the implant (707) forms the anchoring part (715) and has an end which forms the shoulder (717), as well as an axial hole (719), that the secondary part (708) is fixed to the implant (707) in the hole (719) in the latter and has a section which protrudes from the implant (707) and which forms the head (721), and that when the device is assembled the holding means (765) are clamped and/or locked to the secondary part (708).

16. A device according to any one of claims 1 to 15, **characterised in that** the element which can be removably fixed to the support (3, 263, 403, 563, 703, 803, 903, 1003, 1103) is a moulding element (50, 100, 150, 200, 450, 500, 600, 750, 850, 1050, 1150) or a heal-in element (2151) or a build-up element (2050) and/or a supraconstruction (2375), wherein the build-up element (2350) and/or the supraconstruction (2375) are employed, for example, for forming a crown or a bridge or a prosthesis comprising a plurality of artificial teeth.

## Revendications

1. Dispositif pour réaliser une prothèse dentaire, comportant un support (3, 263, 403, 563, 703, 803, 903, 1003, 1103) ainsi qu'un élément (50, 100, 150, 200, 450, 500, 600, 750, 850, 1050, 1150, 1350) pouvant être relié à celui-ci de manière amovible par des moyens de retenue (65, 115, 215, 465, 515, 615, 865, 1165, 1365), dans lequel le support (3, 263, 403, 563, 703, 803, 903, 1003, 1103) et/ou les moyens de retenue (65, 115, 215, 465, 515, 615, 865, 1165, 1365) sont déformables élastiquement au moins par endroits, le support (3, 263, 403, 563, 703, 803, 903, 1003, 1103) comportant en outre une partie d'ancrage (15, 265, 715), destinée à l'ancrage dans un os (250, 300) et/ou un modèle maître (281), une tête (21, 271, 421, 721, 821, 1021, 1121, 1121, 1321) destinée à dépasser de l'os (250, 300) ou du modèle maître (281), ainsi qu'un épaulement (17, 267, 417, 717, 1017, 1117, 1317) prévu entre celle-ci et la partie d'ancrage (15, 265, 715), et l'élément (50, 100, 150, 200, 450, 500, 600, 750, 850, 1050, 1150, 1350) reposant, lorsque le dispositif est assemblé, par une surface d'appui (56) d'un tronçon d'appui (55) sur l'épaulement (17, 267, 417, 717, 1017, 1117, 1317), et enfermant la tête (21, 271, 421, 721, 821, 1021, 1121, 1121, 1321) dans sa section transversale,
**caractérisé en ce que** le support (3, 263, 403, 563, 703, 803, 903, 1003, 1103) présente, sur le côté, opposé à la partie d'ancrage (15, 265, 715), de l'épaulement (17, 267, 417, 717, 1017, 1117, 1317), sur sa surface extérieure, un détalonnage (31, 431, 731) dans lequel les moyens de retenue (65, 115, 215, 465, 515, 615, 865, 1165, 1365) s'engagent de l'extérieur, et **en ce que** les moyens de retenue (65, 115, 215, 465, 515, 615, 865, 1165, 1365) sont disposés par occlusion de la surface d'appui (56) et sont entourés par un espace intermédiaire (69) qui est limité extérieurement par le tronçon d'appui (55).

2. Dispositif pour réaliser une prothèse dentaire, comportant un support (2002) et un élément (2051, 2251, 2350) pouvant être relié de manière amovible à celui-ci par des moyens de retenue (2080, 2280, 2365), le support (2002) et/ou les moyens de retenue (2080, 2280, 2365) pouvant être déformés élastiquement au moins par endroits, le support (2002) comportant en outre une partie d'ancrage (2005) destinée à l'ancrage dans un os et/ou un modèle maître, une tête (2007) destinée à ressortir de l'os ou du modèle maître ainsi qu'un épaulement (2011) prévu entre celle-ci et la partie d'ancrage (2005), l'élément (2051, 2251, 2350) reposant, lorsque le dispositif est assemblé, par une surface d'appui (2056) d'une paroi extérieure (2053), sur l'épaulement (2011), et enfermant la tête (2007) dans sa section transversale, et, lorsque le dispositif est assemblé, les moyens de retenue (2080, 2280, 2365) sont serrés et/ou accrochés avec le support (2002), au moyen d'un tronçon de retenue (2088), dans un trou axial (2025) du support (2002), **caractérisé en ce que** les moyens de retenue (2080, 2280, 2365) contiennent un manchon (2083) avec un tronçon central (2087) élastiquement flexible, **en ce que** le manchon (2083) est relié d'une part à l'élément (2051, 2251, 2350) et comporte d'autre part le moyen de retenue (2088) serré et/ou accroché avec le trou (2025) du support (2002), et **en ce que** le tronçon central (2087) est entouré par un espace intermédiaire (2054) qui est limité de l'extérieur par la paroi (2053) de l'élément (2051, 2251, 2350).

3. Dispositif selon la revendication 1 ou 2, **caractérisé en ce que** la partie d'ancrage (15, 2005) définit un axe (5, 2003), **en ce que** l'épaulement (17, 2011) présente une surface d'épaulement (18, 2012) de forme annulaire, **en ce que** la surface d'appui (56, 2056) est de forme annulaire, **en ce que** la surface d'épaulement (18, 2012) et la surface d'appui (56, 2056) sont toutes deux coniques ou toutes deux planes, présentent des bords extérieurs et reposent l'une sur l'autre lorsque le dispositif est assemblé, et **en ce que**, lorsque le dispositif est assemblé, les bords extérieurs sont visibles depuis leur environnement, le long de toute leur périphérie, dans des directions d'observation approximativement radiales par rapport à l'axe (5, 405, 805) de la partie d'ancrage (15, 2005).

4. Dispositif selon l'une des revendications 1 à 3, **caractérisé en ce que** la tête (21, 821, 2007) définit un axe (5, 823, 2003), et **en ce que** les moyens de retenue (65, 2080) sont flexibles de manière que l'élément (5, 850, 2051) puisse être enlevé du support (3, 803, 2002) et/ou relié à celui-ci, par déplacement dans une direction qui peut former, avec l'axe (5 , 823, 2003) de la tête (21, 821, 2007), un angle allant jusqu'à au moins 15° environ.

5. Dispositif selon l'une des revendications 2 à 4, **caractérisé en ce que** l'épaulement (2011) est coaxial à un axe (2003) défini par la partie d'ancrage (2005), et **en ce que** la tête (2007) possède un tronçon de tête (2015) sensiblement parallèle à cet axe (2003), ainsi qu'un tronçon de tête (2017) généralement conique, se rétrécissant depuis celui-ci vers l'extrémité libre de la tête (2007).

6. Dispositif selon la revendication 5, **caractérisé en ce que** le tronçon de tête conique (2017) définit une surface de cône qui forme avec l'axe (2003) de la partie d'ancrage (15) un angle plus petit que la surface d'épaulement (2012), **en ce que** la surface d'appui (2056) repose sans fente sur la surface d'épaulement conique (2012), et **en ce que** l'élément (2051) présente une surface intérieure conique (2061) qui est soutenue à l'avant, avec un petit jeu, dans le tronçon de tête (2017) généralement conique.

7. Dispositif selon l'une des revendications 1 à 6, **caractérisé en ce que** la tête (21, 271, 421, 721, 821, 1021, 1121) présente au moins une découpe (27, 28, 427, 827, 1127, 1128) qui est disposée de manière à recevoir une saillie (121, 171, 172, 471, 521, 871, 1171) de l'élément (100, 150, 450, 500, 850, 1150) et peut ainsi bloquer celui-ci contre des rotations.

8. Dispositif selon l'une des revendications 1 à 7, **caractérisé en ce que** le support (3, 263, 403, 563, 703, 1003, 1103) définit un axe (5, 405, 1005), **en ce que** la tête (21, 271, 421, 721, 1021, 1121) présente des découpes (27, 28, 427, 1127, 1128) réparties autour de l'axe (5, 405, 1005), et **en ce que** celles-ci comportent plusieurs premières découpes (27, 427, 1127) de formes et de dimensions identiques ainsi qu'une deuxième découpe (28, 1128) plus large et/ou plus profonde.

9. Dispositif selon l'une des revendications 2 à 8, **caractérisé en ce que** les moyens de retenue (2080) agissent, lorsque le dispositif est assemblé, sur un taraudage (2027) du trou (2025) du support (2002).

10. Dispositif selon l'une des revendications 1 à 9, **caractérisé en ce que** les moyens de retenue (65, 2280) comportent un ergot (67) de forme annulaire ou des ergots répartis le long d'un cercle, et **en ce que** le ou chaque ergot (67) dépasse, lorsque le dispositif est assemblé, approximativement dans la direction radiale vers l'intérieur ou l'extérieur d'un tronçon de retenue (31, 2231) du support (3, 2002), et agit sur ce tronçon de retenue (31, 2231).

11. Dispositif selon l'une des revendications 1 à 10, **caractérisé en ce qu'**un tronçon d'appui (55) de l'élément (50, 100, 450, 600, 750, 850, 1050, 1150), reposant, lorsque le dispositif est assemblé, sur l'épaulement (17, 267, 417, 717, 1017, 1117), et les moyens de retenue (65, 115, 465, 515, 615, 765, 1165) sont formés ensemble dans un corps d'un seul tenant ou des corps initialement séparés reliés entre eux rigidement.

12. Dispositif selon l'une des revendications 2 à 11, **caractérisé en ce que** la partie d'ancrage (2005) définit un axe (2003), **en ce que** l'élément (2051) et les moyens de retenue (2080) sont constitués de corps séparés, pouvant coulisser les uns par rapport aux autres le long de l'axe (2003), **en ce que** l'élément (2051) possède une surface de retenue (2059) tournée à l'opposé du support (2002) et formant un angle avec l'axe (2003), et **en ce que** les moyens de retenue (2081) agissent sur la surface de retenue (2059).

13. Dispositif selon la revendication 12, **caractérisé en ce que** les moyens de retenue (2081) agissent, par des moyens de pression (2091) élastiquement déformables, sur la surface de retenue (2059), et **en ce que** les moyens de pression (2091) produisent une force pressant l'élément de déformation (2005). contre l'épaulement (2011), les moyens de pression (2091) comportant de préférence une lèvre de forme annulaire enfermant l'axe (2003), ou une couronne de lèvres réparties autour de l'axe (2003), et sont constitués de préférence avec le tronçon de retenue (2088) d'un corps en matière synthétique d'un seul tenant.

14. Dispositif selon l'une des revendications 1 à 13, **caractérisé en ce que** la partie d'ancrage (2005), l'épaulement (2011) et la tête (2007) sont reliés entre eux de manière rigide et non séparable, et comportent par exemple un corps d'un seul tenant qui s'étend d'une extrémité libre de la partie d'ancrage (2005) à une extrémité libre de la tête (2007).

15. Dispositif selon l'une des revendications 1 à 14, **caractérisé en ce que** le support (703) comporte un implant (707) et une partie secondaire (708) initialement séparée, **en ce que** l'implant (707) forme la partie d'ancrage (715) et présente une extrémité formant l'épaulement (717) ainsi qu'un trou axial (719), **en ce que** la partie secondaire (708) est fixée dans le trou (719) de l'implant (707), sur celui-ci, et possède un tronçon ressortant de l'implant (707), formant la tête (721), et **en ce que** les moyens de retenue (765) sont serrés et/ou accrochés avec la partie secondaire (708), lorsque le dispositif est assemblé.

16. Dispositif selon l'une des revendications 1 à 15, **caractérisé en ce que** l'élément pouvant être fixé de manière amovible au support (3, 263, 403, 563, 703, 803, 903, 1003, 1103) est un élément surmoulé (50, 100, 150, 200, 450, 500, 600, 750, 850, 1050, 1150) ou un élément se cicatrisant à l'intérieur (2151) ou un élément rapporté (2050) et/ou une superstructure (2375), l'élément rapporté (2350) et/ou la superstructure (2375) servant par exemple à former une couronne ou un pont ou une prothèse avec plusieurs dents artificielles.
